(19) **Europäisches Patentamt**
**European Patent Office**
**Office européen des brevets**

(11) **EP 4 685 969 A1**

(12) **EUROPEAN PATENT APPLICATION**
published in accordance with Art. 153(4) EPC

(43) Date of publication:
**28.01.2026 Bulletin 2026/05**

(21) Application number: **23962930.6**

(22) Date of filing: **29.12.2023**

(51) International Patent Classification (IPC):
***H01M 50/342*** (2021.01)     ***H01M 50/103*** (2021.01)

(52) Cooperative Patent Classification (CPC):
**H01M 50/103; H01M 50/342**

(86) International application number:
**PCT/CN2023/143624**

(87) International publication number:
**WO 2025/138256 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• **WU, Kai**
  **Ningde, Fujian 352100 (CN)**
• **GU, Mingguang**
  **Ningde, Fujian 352100 (CN)**
• **LI, Yao**
  **Ningde, Fujian 352100 (CN)**
• **CHEN, Shilong**
  **Ningde, Fujian 352100 (CN)**

• **LU, Ming**
  **Ningde, Fujian 352100 (CN)**
• **LI, Wei**
  **Ningde, Fujian 352100 (CN)**
• **LIU, Sike**
  **Ningde, Fujian 352100 (CN)**
• **LI, Quankun**
  **Ningde, Fujian 352100 (CN)**
• **GAN, Jiuqiang**
  **Ningde, Fujian 352100 (CN)**
• **HUANG, Xiuxue**
  **Ningde, Fujian 352100 (CN)**
• **CHEN, Weike**
  **Ningde, Fujian 352100 (CN)**

(74) Representative: **Ran, Handong et al
Maucher Jenkins
Seventh Floor Offices
Artillery House
11-19 Artillery Row
London SW1P 1RT (GB)**

(54) **BATTERY CELL, BATTERY, AND ELECTRICAL APPARATUS**

(57)    The present application belongs to the technical field of batteries, and provides a battery cell, a battery, and an electrical apparatus. The battery cell comprises a casing and a pressure relief component. The casing comprises a first wall. The pressure relief component is disposed on the first wall, the pressure relief component is provided with a first groove, the first groove defines at least one predetermined pressure relief region, and the pressure relief component is configured to be capable of cracking along at least part of the first groove when pressure is relieved from the battery cell. The pressure relief component is further provided with a second groove, the second groove and the first groove are arranged in a first direction, the second groove is located on a side of the first groove in the first direction, the first direction is perpendicular to the thickness direction of the first wall, and the second groove is configured to guide at least part of the predetermined pressure relief region to invert so as to open at least part of the predetermined pressure relief region. According to such a battery cell, the effect of inverting around the second groove after the predetermined pressure relief region is opened can be improved, so that the angle of inversion of the predetermined pressure relief region is increased, which is beneficial for increasing the pressure relief area of the battery cell.

EP 4 685 969 A1

**FIG. 7**

## Description

### TECHNICAL FIELD

The present application relates to the field of battery technologies, and in particular, to a battery cell, a battery, and an electrical apparatus.

### BACKGROUND

In recent years, new energy vehicles have made a leap forward in development. In the field of electric vehicles, power batteries, as power sources of electric vehicles, play an irreplaceable and important role. With the vigorous promotion of the new energy vehicles, the demand for power battery products is also growing. Batteries, as core components of the new energy vehicles, have high requirements in terms of reliability and service life.

In a battery technology, in order to ensure the safety of a battery cell, a score groove for relieving an internal pressure of the battery cell is generally disposed on a shell of the battery cell, so that the shell can rupture at a position where the score groove is provided when thermal runaway occurs in the battery cell, so as to release the internal pressure of the battery cell. However, an existing battery cell has a low pressure relief rate when thermal runaway occurs, which makes the battery cell have a risk of fire and explosion due to untimely pressure relief, resulting in low use reliability of the battery cell.

### SUMMARY

embodiments of the present application provide a battery cell, a battery, and an electrical apparatus, which can effectively improve use reliability of the battery cell.

In a first aspect, an embodiment of the present application provides a battery cell, including a shell and a pressure relief component. The shell includes a first wall, the pressure relief component is disposed on the first wall and is provided with a first groove, the first groove defines at least one predetermined pressure relief region, and the pressure relief component is configured to be capable of rupturing along at least part of the first groove during pressure relief of the battery cell. The pressure relief component is further provided with a second groove, the second groove and the first groove are arranged in a first direction, the second groove is located on one side of the first groove in the first direction, the first direction is perpendicular to a thickness direction of the first wall, and the second groove is configured to guide at least part of the predetermined pressure relief region to flip over to open at least part of the predetermined pressure relief region.

In the above technical solution, the pressure relief component is disposed on the first wall of the shell. The first groove and the second groove are formed in the pressure relief component, and the first groove defines the predetermined pressure relief region, so that the predetermined pressure relief region can be opened after the pressure relief component ruptures along at least part of the first groove, and can be flipped around a position where the second groove is located to release an internal pressure of the battery cell. By disposing the first groove and the second groove to be of a structure arranged in the first direction, the second groove and the first groove are of a structure that is just in contact or arranged at intervals, so that the second groove is located on one side of the first groove in the first direction. On the one hand, interference effect between the first groove and the second groove can be reduced, processing of the first groove and the second groove separately is facilitated, and a phenomenon that the second groove is torn when the first groove ruptures can be alleviated, which is beneficial to improve an effect of flipping the predetermined pressure relief region around the second groove. On the other hand, the effect of flipping the predetermined pressure relief region around the position where the second groove is located after being opened can be improved, so as to expand a flipping angle of the predetermined pressure relief region, thereby increasing a pressure relief area of the battery cell, increasing a pressure relief rate of the battery cell when thermal runaway occurs, and then reducing a risk of fire, explosion or connection failure of the battery cell due to untimely pressure relief, which is beneficial to improve use reliability of the battery cell.

In some embodiments, the first groove and the second groove are disposed in the first direction at intervals.

In the above technical solution, by disposing the first groove and the second groove to be of a structure arranged at intervals in the first direction, the first groove is not in contact with the second groove. On the one hand, mutual influence between the first groove and the second groove during processing can be reduced, and stress influence between a region where the pressure relief component is provided with the first groove and a region where the pressure relief component is provided with the second groove can be reduced. On the other hand, a phenomenon of tearing the second groove when the first groove ruptures can be further alleviated, which is beneficial to improve the effect of flipping the predetermined pressure relief region around the second groove.

In some embodiments, in the first direction, a minimum distance between a projection of the first groove in the thickness direction of the first wall and a projection of the second groove in the thickness direction of the first wall is $L_1$, which meets that 0.1 mm$\leq L_1\leq$4 mm; optionally, 0.2 mm$\leq L_1\leq$2 mm.

In the above technical solution, by setting the minimum distances of the projections of the first groove and the second groove in the thickness direction of the first wall in the first direction to be in a range from 0.1 mm to 4 mm, the minimum distances of the first groove and the second groove in the first direction are in a range from 0.1 mm to 4 mm. On the one hand, the minimum distances of the projections of the first groove and the second groove in the thickness direction of the first wall in the first direction are set to be greater than or equal to 0.1 mm to reduce the interference effect between the first groove and the second groove, which is conducive to reducing difficulty of processing the first groove and the second groove on the pressure relief component, and can further alleviate a phenomenon that the second groove is torn when the first groove ruptures. On the other hand, the minimum distances of the projections of the first groove and the second groove in the thickness direction of the first wall in the first direction are set to be less than or equal to 4 mm to increase an angle of the predetermined pressure relief region flipping around the second groove and the pressure relief area after the predetermined pressure relief region is opened, thereby further increasing the pressure relief rate of the battery cell when thermal runaway occurs. Similarly, by setting the minimum distances of the projections of the first groove and the second groove in the thickness direction of the first wall in the first direction to be in a range from 0.2 mm to 2 mm, the minimum distances of the first groove and the second groove in the first direction are in a range from 0.2 mm to 2 mm. On the one hand, the minimum distances of the projections of the first groove and the second groove in the thickness direction of the first wall in the first direction are further set to be greater than or equal to 0.2 mm to further reduce the interference effect between the first groove and the second groove, which is conducive to further reducing difficulty of processing the first groove and the second groove on the pressure relief component, and can further alleviate a phenomenon that the second groove is torn when the first groove ruptures. On the other hand, the minimum distances of the projections of the first groove and the second groove in the thickness direction of the first wall in the first direction are set to be less than or equal to 2 mm to further increase the angle of the predetermined pressure relief region flipping around the second groove and the pressure relief area after the predetermined pressure relief region is opened, thereby further increasing the pressure relief rate of the battery cell when thermal runaway occurs. Thus, the battery cell can further improve a flipping effect around the position where the second groove is located after the predetermined pressure relief region is opened while alleviating synchronous tearing of the second groove by the first groove.

In some embodiments, the shell further includes a second wall and a third wall which are disposed opposite to each other in the first direction, the first wall is connected with the second wall and the third wall, in the first direction, the second wall has a first outer surface facing away from an interior of the shell, and the third wall has a second outer surface facing away from an interior of the shell. In the first direction, the second groove is formed between the first groove and the first outer surface; and/or in the first direction, the second groove is formed between the first groove and the second outer surface.

In the above technical solution, when the second groove is formed between the first groove and the first outer surface of the second wall, the second groove is closer to the first outer surface of the second wall than the first groove, so that rigidity of the position where the pressure relief component is provided with the second groove is greater than rigidity of a position where the pressure relief component is provided with the first groove. Therefore, when the battery cell releases the internal pressure, deformation of the pressure relief component at a position where the first groove is located is greater than deformation of the pressure relief component at the position where the second groove is located, which is conducive to making a region where the pressure relief component is provided with the first groove rupture and release the internal pressure of the battery cell prior to a region where the pressure relief component is provided with the second groove. On the one hand, a phenomenon of poor pressure relief effect of the battery cell due to the fact that the pressure relief component ruptures from the region where the second groove is provided can be alleviated. On the other hand, a situation that the predetermined pressure relief region is stably flipped open under the guidance of a groove bottom wall of the second groove can be achieved. In the above technical solution, when the second groove is formed between the first groove and the second outer surface of the third wall, the second groove is closer to the second outer surface of the third wall than the first groove, so that rigidity of the position where the pressure relief component is provided with the second groove is greater than rigidity of a position where the pressure relief component is provided with the first groove. Therefore, when the battery cell releases the internal pressure, deformation of the pressure relief component at the position where the first groove is located is greater than deformation of the pressure relief component at the position where the second groove is located, which is conducive to making the region where the pressure relief component is provided with the first groove rupture and release the internal pressure of the battery cell preferentially before the region where the pressure relief component is provided with the second groove. On the one hand, the phenomenon of the poor pressure relief effect of the battery cell due to the fact that the pressure relief component rupture from the region where the second groove is provided can be alleviated. On the other hand, the situation that the predetermined pressure relief region is stably flipped open under the guidance of the groove bottom wall of the second groove can be achieved.

In some embodiments, in the thickness direction of the first wall, the first wall has a third outer surface facing away from the interior of the shell, and the third outer surface is connected to the first outer surface through a first arc surface; wherein, in the first direction, the second groove is located between the first arc surface and the first groove.

In the above technical solution, by disposing the second groove between the first groove and the first arc surface in the first direction, the second groove is not in contact with a corner of the shell, so as to reduce influence of stress at the corner of the shell on the region where the second groove is located, and can reduce processing difficulty of the second groove.

In some embodiments, in the thickness direction of the first wall, the first wall has a third outer surface facing away from the interior of the shell, and the third outer surface is connected to the second outer surface through a second arc surface; wherein, in the first direction, the second groove is located between the second arc surface and the first groove.

In the above technical solution, by disposing the second groove between the first groove and the second arc surface in the first direction, the second groove is not in contact with a corner of the shell, so as to reduce influence of stress at the corner of the shell on the region where the second groove is located, and can reduce processing difficulty of the second groove.

In some embodiments, in the first direction, a difference between a minimum distance $L_2$ from the first groove to the first outer surface and a minimum distance $L_3$ from the first groove to the second outer surface is greater than or equal to 0, and the difference between the minimum distance $L_2$ from the first groove to the first outer surface and the minimum distance $L_3$ from the first groove to the second outer surface is less than or equal to 0.1 times a distance D between the first outer surface and the second outer surface.

In the above technical solution, by setting a ratio of the difference between the minimum distance $L_2$ between the first groove and the first outer surface and the minimum distance $L_3$ between the first groove and the second outer surface to the distance D between the first outer surface and the second outer surface to be in a range from 0 to 0.1, the first groove is located in a middle region of the first wall in the first direction, which is conducive to alleviating a phenomenon that the first groove deviates excessively from a center position of the first wall in the first direction. On the one hand, it is convenient to dispose the second groove on one side of the first groove in the first direction, which is conducive to reducing the difficulty of disposing the second groove on the pressure relief component. On the other hand, a region where the pressure relief component is provided with the first groove is more prone to rupturing for pressure relief, so that under the same blasting pressure, a residual thickness of the region where the pressure relief component is provided with the first groove can be increased to improve fatigue resistance of the pressure relief component, thereby effectively prolonging the service life and improving use reliability of the battery cell.

In some embodiments, in the first direction, a minimum distance between the first groove and the first outer surface is $L_2$, and a minimum distance between the first groove and the second outer surface is $L_3$, which meets that 2 mm$\leq L_2 \leq$12 mm; and/or, 2 mm$\leq L_3 \leq$12 mm.

In the above technical solution, by setting the minimum distance between the first groove and the first outer surface to be in a range from 2 mm to 12 mm, on the one hand, the minimum distance between the first groove and the first outer surface is set to be greater than or equal to 2 mm, so as to alleviate a phenomenon of large difficulty of disposing the second groove between the first groove and the first outer surface due to excessive small spacing between the first groove and the first outer surface, and reduce a stress concentration phenomenon. On the other hand, the minimum distance between the first groove and the first outer surface is set to be less than or equal to 12 mm, so as to reduce a phenomenon of space waste between the first groove and the first outer surface, thereby alleviating a phenomenon that an area of the region where the pressure relief component is provided with the first groove is limited, which is beneficial to increase the area of the region of the pressure relief component used to be provided with the first groove. Similarly, by setting the minimum distance between the first groove and the second outer surface to be in a range from 2 mm to 12 mm, on the one hand, the minimum distance between the first groove and the second outer surface is set to be greater than or equal to 2 mm, so as to alleviate a phenomenon of large difficulty of disposing the second groove between the first groove and the second outer surface due to excessive small spacing between the first groove and the second outer surface, and reduce the stress concentration phenomenon. On the other hand, the minimum distance between the first groove and the second outer surface is set to be less than or equal to 12 mm, so as to reduce a phenomenon of space waste between the first groove and the second outer surface, thereby alleviating a phenomenon that an area of the region where the pressure relief component is provided with the first groove is limited, which is beneficial to increase the area of the region of the pressure relief component used to be provided with the first groove.

In some embodiments, in the first direction, a difference between a minimum distance $L_4$ from the second groove to the first outer surface and a minimum distance $L_5$ from the second groove to the second outer surface is greater than or equal to 0.4 times the distance D between the first outer surface and the second outer surface. A first weak portion is formed at a bottom of the first groove, the pressure relief component is configured to be capable of rupturing along at least part of the first weak portion during pressure relief of the battery cell, the first weak portion includes at least one weak segment, and a second weak portion is formed at a bottom of the second groove. A cross-sectional area $S_2$ of the second weak portion perpendicular to its extension direction is greater than 0.7 times a cross-sectional area $S_1$ of the weak segment perpendicular to its extension direction, and the cross-sectional area $S_2$ of the second weak portion perpendicular to its extension direction is less than or equal to 1.5 times the cross-sectional area $S_1$ of the weak segment perpendicular to its extension direction.

In the above technical solution, when the difference between the minimum distance $L_4$ from the second groove to the first outer surface and the minimum distance $L_5$ from the second groove to the second outer surface is greater than or equal to 0.4 times the distance D between the first outer surface and the second outer surface, the second groove deviates from the center position of the first wall in the first direction by a large distance, so that the second groove is closer to the first outer surface or the second outer surface. Thus, rigidity of a position where the pressure relief component is provided with the second groove is greatly different from rigidity of a position where the pressure relief component is provided with the first groove, and the rigidity has a greater influence on the first weak portion and the second weak portion of the pressure relief component during rupturing. If the influence of the rigidity on the first weak portion and the second weak portion of the pressure relief component is not considered, the cross-sectional area of the second weak portion perpendicular to its extension direction only needs to be greater than the cross-sectional area of the weak segment perpendicular to its extension direction. That is, the cross-sectional area $S_2$ of the second weak portion perpendicular to its extension direction is greater than the cross-sectional area $S_1$ of the weak segment perpendicular to its extension direction, so that the first weak portion ruptures and releases pressure prior to the second weak portion, and the second weak portion plays a role in guiding the predetermined pressure relief region defined by the first groove. However, considering that the rigidity has a greater influence on the rupturing of the first weak portion and the second weak portion (when $S_1$ and $S_2$ are the same, the second weak portion is more difficult to rupture than the first weak portion, therefore, the cross-sectional area of the second weak portion may be set to be smaller), when a ratio of the cross-sectional area of the second weak portion perpendicular to its extension direction to the cross-sectional area of the weak segment perpendicular to its extension direction is greater than 0.7 and less than or equal to 1, the first weak portion can be opened for pressure relief prior to the second weak portion, and the second weak portion plays a role in guiding the predetermined pressure relief region defined by the first groove. Similarly, since the rigidity has a greater influence on the rupturing of the first weak portion and the second weak portion, when the ratio of the cross-sectional area of the second weak portion perpendicular to its extension direction to the cross-sectional area of the weak segment perpendicular to its extension direction is less than or equal to 1.5, the phenomenon of excessive difference in rigidity between the second weak portion and the first weak portion can be alleviated, so that the rigidity of the second weak portion is close to that of the first weak portion. Thus, the obstacle to the flipping and opening of the predetermined pressure relief region can be reduced, so that the predetermined pressure relief region can be more easily flipped and opened during pressure relief, which is conducive to alleviating a phenomenon of the explosion or bursting of the battery cell caused by the untimely pressure relief of the pressure relief component.

In some embodiments, in the first direction, the distance between the first outer surface and the second outer surface is D, which meets that 15 mm≤D≤90 mm.

In the above technical solution, by setting the distance between the first outer surface and the second outer surface in the first direction to be in a range from 15 mm to 90 mm, a size of the shell in the first direction is in a range from 15 mm to 90 mm. On the one hand, the size of the shell in the first direction is set to be greater than or equal to 15 mm, so that the pressure relief component disposed on the first wall has sufficient space in the first direction to be provided with the first groove and the second groove, which is conducive to reducing the difficulty of disposing the pressure relief component on the first wall and disposing the first groove and the second groove on the pressure relief component. On the other hand, the size of the shell in the first direction is set to be less than or equal to 90 mm to alleviate a phenomenon of greater manufacturing difficulty due to the excessive size of the battery cell in the first direction.

In some embodiments, in the thickness direction of the first wall, two ends of the projection of the second groove in its extension direction extend beyond two end portions of the first groove.

In the above technical solution, in the thickness direction of the first wall, by setting the projection of the second groove in its extension direction to extend beyond the two end portions of the projection of the first groove respectively, the second groove is of a structure in which the two ends in its extension direction respectively exceed the two end portions of the first groove. On the one hand, the size of the second groove in its extension direction is greater than that of the first groove, so that the predetermined pressure relief region defined by the first groove can be flipped around the second groove, and the flipping effect of the predetermined pressure relief region can be improved, thereby increasing the pressure relief area of the battery cell to increase the pressure relief rate of the battery cell when thermal runaway occurs. On the other hand, an absorption effect of the second groove on an excess material extruded out of the first groove of the pressure relief component during a molding process can be improved, and a separation effect of the second groove between an edge of the first groove and an edge of the first wall can be improved, so as to improve a blocking effect of the second groove on deformation energy of the battery cell when the battery cell is subjected to internal and external impact forces.

In some embodiments, a length of the second groove is $L_6$, which meets that 8 mm≤$L_6$≤60 mm.

In the above technical solution, by setting the length of the second groove to be in a range from 8 mm to 60 mm, on the one hand, setting the length of the second groove to be greater than or equal to 8 mm can effectively reduce the processing difficulty of the second groove, and can alleviate a phenomenon that the size of the first groove is smaller due to the limitation of the second groove, which is beneficial to increase the area of the region where the pressure relief component is provided with the first groove. On the other hand, setting the length of the second groove to be less than or equal to 60 mm can alleviate a phenomenon of waste caused by excessive processing of the second groove, and can reduce a space occupied by the second groove on the pressure relief component, which is beneficial to improve an overall structural strength of the pressure relief component.

In some embodiments, in the thickness direction of the first wall, the first groove and the second groove are respectively formed in two sides of the pressure relief component.

In the above technical solution, by respectively disposing the first groove and the second groove on two sides of the pressure relief component in the thickness direction of the first wall, it is convenient to process the first groove and the second groove respectively on the two sides of the pressure relief component, which is beneficial to reduce the mutual influence of the first groove and the second groove during the processing.

In some embodiments, in the thickness direction of the first wall, the first groove is disposed on one side of the pressure relief component facing away from the interior of the shell.

In the above technical solution, by disposing the first groove on one side of the pressure relief component facing away from the interior of the shell, it is convenient to process and form the first groove on the pressure relief component, which is beneficial to reduce the processing difficulty of the first groove and improve production efficiency of the battery cell.

In some embodiments, in the thickness direction of the first wall, the second groove is disposed on one side of the pressure relief component facing the interior of the shell.

In the above technical solution, by disposing the second groove on one side of the pressure relief component facing the interior of the shell, it is convenient for the predetermined pressure relief region to be flipped towards an outer side of the shell around the groove bottom wall of the second groove when it is opened, thereby reducing the interference effect of a groove side surface of the second groove on the predetermined pressure relief region during the flipping process, which is beneficial to improve the flipping effect of the predetermined pressure relief region.

In some embodiments, the first groove includes a first groove segment and two second groove segments, the two second groove segments are disposed opposite to each other in a second direction, and the second groove segments and the second groove are arranged in the first direction; and the first groove segment is connected to the two second groove segments, the first groove segment and the two second groove segments jointly define the predetermined pressure relief region, and the second direction is perpendicular to the thickness direction of the first wall and the first direction.

In the above technical solution, the first groove includes the two second groove segments disposed opposite to each other in the second direction and the first groove segment connected to the two second groove segments, so that the pressure relief component can rupture along the first groove segment and the two second groove segments during pressure relief of the battery cell, so as to open the predetermined pressure relief region to release the internal pressure of the battery cell. By using the first groove with such a structure, on the one hand, it is convenient to process the first groove on the pressure relief component and form the predetermined pressure relief region, and the predetermined pressure relief region defined by the first groove of such a structure is more prone to flipping around the second groove. On the other hand, an intersection position of the first groove segment and the second groove segments is weaker, which makes the pressure relief component be more prone to rupturing and open the predetermined pressure relief region for pressure relief.

In some embodiments, connection positions of the two second groove segments and the first groove segment both deviate from two ends of the two second groove segments, so as to form the predetermined pressure relief regions on two sides of the first groove segment in the first direction; wherein the pressure relief component is provided with the two second grooves, and in the first direction, the two second grooves are located on two sides of the first groove respectively.

In the above technical solution, by setting the connection positions of the two second groove segments and the first groove segment to be located between the two ends of the corresponding second groove segments, so that the first groove segment and the two second groove segments form the first groove similar to an "H"-shaped structure. Thus, the predetermined pressure relief regions can be formed on the two sides of the first groove segment of the first groove, and the two predetermined pressure relief regions can be opened in an opposite manner for pressure relief during pressure relief of the battery cell, which is beneficial to further increase the pressure relief effect of the battery cell and can effectively increase the pressure relief rate of the battery cell.

In some embodiments, the first groove segment and the two second groove segments both extend along a linear trajectory, and the first groove segment is perpendicular to the two second groove segments.

In the above technical solution, by setting the two second groove segments to be perpendicular to the first groove segment, so that an extension direction of the first groove segment is an arrangement direction of the two second groove segments. On the one hand, regularity of a shape of the first groove can be improved, which is beneficial to reduce the processing difficulty of the first groove, so as to reduce a manufacturing cost of the battery cell. On the other hand, it is convenient for the two predetermined pressure relief regions, on the pressure relief component, located on the two sides of the first groove segment to perform pressure relief in an opposite direction during pressure relief of the battery cell, which is beneficial to improve the pressure relief efficiency of the battery cell.

In some embodiments, the second groove segments extend in the first direction, and a length of each second groove segment in the first direction is $L_7$, which meets that $6 \text{ mm} \leq L_7 \leq 50 \text{ mm}$.

In the above technical solution, by setting the second groove segments as a structure extending in the first direction, and setting the length of the second groove segments in the first direction to be in a range from 6 mm to 50 mm, on the one hand, the length of the second groove segments is set to be greater than or equal to 6 mm, so as to increase an area of the predetermined pressure relief region defined by the first groove segment and the two second groove segments, thereby facilitating the increase of the pressure relief area of the battery cell. On the other hand, the length of the second groove segments is set to be less than or equal to 50 mm, so as to save a space occupied by the second groove segments on the pressure relief component in the first direction, so that the first groove has enough space on one side of the first direction to be provided with the second groove, so as to reduce the manufacturing difficulty of the second groove.

In some embodiments, the first groove includes a first groove segment and a second groove segment, the first groove segment is connected to the second groove segment, and the first groove segment and the second groove segment jointly define the predetermined pressure relief region.

In the above technical solution, by setting the first groove to have the first groove segment and the second groove segment which are connected, and making the first groove segment and the second groove segment jointly define the predetermined pressure relief region, on the one hand, the pressure relief area of the battery cell can be increased to increase the pressure relief rate of the battery cell. On the other hand, an intersection position of the first groove segment and the second groove segment is made weaker, and more prone to rupturing and opening the predetermined pressure relief region to release the internal pressure of the battery cell.

In some embodiments, the first groove is a groove extending along an arc-shaped trajectory, and the predetermined pressure relief region is located on an inner side of the first groove.

In the above technical solution, by setting the first groove to be a structure extending along the arc-shaped trajectory, the predetermined pressure relief region is formed on the inner side of the first groove. The first groove of such a structure is easy to manufacture and form on the pressure relief component, which is beneficial to reduce the manufacturing difficulty of the battery cell.

In some embodiments, the first groove includes multi-stage grooves arranged sequentially in the thickness direction of the first wall.

In the above technical solution, by setting the first groove as a multi-stage stepped groove structure disposed in the thickness direction of the first wall, the first groove is a groove structure formed by multiple processing. In a case of the same depth, on the one hand, by using the first groove of such a structure, a depth of single processing of the first groove can be reduced, which is beneficial to reduce the manufacturing difficulty of the first groove and the demand for a manufacturing device, so as to reduce the manufacturing cost, and forming force exerted on the pressure relief component during the single processing of the first groove can be reduced, which is beneficial to reduce the risk of cracks in the pressure relief component, so as to improve the production quality of the battery cell. On the other hand, a material flow shape of the first groove during the formation process can be improved, which is beneficial to the flow of a material generated when the first groove is formed, so as to improve the structural consistency of the first groove.

In some embodiments, the pressure relief component and the first wall are integrally formed.

In the above technical solution, by setting the pressure relief component and the first wall as an integrally formed structure, the pressure relief component is a structure integrated on the first wall, that is, the pressure relief component is a wall of the shell. Correspondingly, the first wall is provided with the first groove and the second groove. The battery cell adopting such a structure can improve the structural strength of the pressure relief component disposed on the first wall, and can reduce the risk of liquid leakage caused by improper assembly between the pressure relief component and the first wall.

In some embodiments, the first groove is formed on the first wall in a stamping manner; and/or the second groove is formed on the first wall in a stamping manner.

In the above technical solution, by forming the first groove on the first wall in a stamping manner, a forming manner of the first groove is simple, which is beneficial to reduce the production cost of the battery cell. Similarly, by forming the second groove on the first wall in a stamping manner, a forming manner of the second groove is simple, which is beneficial to reduce the production cost of the battery cell.

In some embodiments, the pressure relief component is separately disposed from the first wall.

In the above technical solution, by setting the pressure relief component and the first wall as a separately disposed structures, the pressure relief component is a structure installed on the first wall. The battery cell of such a structure can reduce the difficulty of disposing the pressure relief component on the first wall, and make processing procedures of the shell and processing procedures of the pressure relief component be carried out simultaneously, which is conducive to optimizing the production rhythm of the battery cell.

In some embodiments, the first wall is of a rectangular structure, and a width direction of the first wall is parallel to the first direction.

In the above technical solution, by setting the first wall as the rectangular structure and the width direction of the first wall to be the first direction, the second groove is located on one side of the first groove in the width direction of the first wall, so that the second groove is formed on the side where extrusion or impact is extremely likely to occur during the forming process of the first groove, and thus the second groove can further buffer an extrusion phenomenon of the forming of the first groove, and can further play a protective role in buffering the influence of stress on the first groove.

In some embodiments, in the thickness direction of the first wall, a minimum residual thickness of the second groove is greater than a minimum residual thickness of the first groove.

In the above technical solution, by setting the minimum residual thickness of the second groove to be greater than the minimum residual thickness of the first groove, the strength of the region where the pressure relief component is provided with the first groove is smaller than the strength of the region where the pressure relief component is provided with the second groove, so that the pressure relief component can preferentially rupture along the first groove and release the internal pressure of the battery cell, which is beneficial to alleviate a phenomenon of a poor pressure relief effect of the battery cell due to the fact that the pressure relief component ruptures from the region provided with the second groove.

In some embodiments, the shell includes: a shell body and an end cover. An accommodating cavity having an opening is formed in the shell body, and the accommodating cavity is configured to accommodate an electrode assembly; and the end cover closes the opening, wherein the shell body includes the first wall; or the end cover is the first wall.

In the above technical solution, by setting the first wall of the shell as one wall of the shell body, the battery cell of such a structure can make the region of the shell provided with the pressure relief component far away from the end cover, thereby effectively alleviating a phenomenon that the stress caused by the interconnection between the end cover and the shell body acts on the pressure relief component, so as to reduce the impact on the first groove and the second groove of the pressure relief component, which is beneficial to reduce the risk of rupturing or structural strength reduction of the pressure relief component under pulling of the stress, thereby prolonging the service life of the battery cell and improving the use reliability of the battery cell. By setting the first wall of the shell as the end cover of the shell for closing the opening, the battery cell of such a structure facilitates disposing the pressure relief component on the end cover, which is beneficial to reduce the manufacturing difficulty of the battery cell, so as to improve the production efficiency of the battery cell.

In some embodiments, the shell includes: a shell body and two end covers. An accommodating cavity is formed in the shell body, the accommodating cavity is configured to accommodate an electrode assembly, openings are formed in two opposite ends of the shell body respectively, and both the two openings communicate with the accommodating cavity; and the two end covers close the two openings respectively; wherein one of the two end covers is the first wall; or the shell body includes the first wall.

In the above technical solution, the shell body of the shell is provided with the openings on two opposite ends, and the two end covers respectively close the two openings. The first wall is one of the two end covers. The battery cell of such a structure is convenient to assemble the battery cell from the two ends of the shell body, which is conducive to reducing the manufacturing difficulty and assembly difficulty of the battery cell. It is also convenient to dispose the pressure relief component on the end covers, which is conducive to reducing the manufacturing difficulty of the battery cell, so as to improve the production efficiency of the battery cell. By setting the first wall of the shell as one wall of the shell, the battery cell of such a structure can make the region of the shell provided with the pressure relief component far away from the end cover, thereby effectively alleviating a phenomenon that the stress caused by the interconnection between the end cover and the shell acts on the pressure relief component, so as to reduce the impact on the first groove and the second groove of the pressure relief component, which is beneficial to reduce the risk of rupturing or structural strength reduction of the pressure relief component under pulling of the stress, thereby prolonging the service life of the battery cell and improving the use reliability of the battery cell.

In some embodiments, a material of the first wall includes a steel material or an aluminum alloy.

In a second aspect, an embodiment of the present application further provides a battery, including the battery cell above.

In a third aspect, an embodiment of the present application further provides an electrical apparatus, including the above-mentioned battery cell, the battery cell being configured to provide electric energy.

## DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.

FIG. 1 is a schematic structural view of a vehicle according to some embodiments of the present application;
FIG. 2 is an exploded structural view of a battery according to some embodiments of the present application;
FIG. 3 is a schematic structural view of a battery cell according to some embodiments of the present application;
FIG. 4 is an exploded structural view of a battery cell provided by some embodiments of the present application;
FIG. 5 is a schematic structural diagram of a shell body of a shell of a battery cell provided by some embodiments of the present application;
FIG. 6 is a bottom view of a shell body of a shell of a battery cell provided by some embodiments of the present application;

FIG. 7 is a partial enlarged view at a position A of a shell body shown in FIG. 6;

FIG. 8 is a partial section-view of a shell body of a shell of a battery cell provided by some embodiments of the present application;

FIG. 9 is a partial enlarged view at a position B of a shell body shown in FIG. 8;

FIG. 10 is a bottom view of a shell body of a shell of a battery cell provided by further embodiments of the present application; and

FIG. 11 is a bottom view of a shell body of a shell of a battery cell provided by still further embodiments of the present application.

Reference numerals: 1000-Vehicle; 100-Battery; 10-Box; 11-First box body; 12-Second box body; 20-Battery cell; 21-Shell; 211-First wall; 2111-Third outer surface; 212-Shell body; 2121-Accommodating cavity; 2122-Opening; 2123-Second wall; 2123a-First outer surface; 2124-Third wall; 2124a-Second outer surface; 2125-Fourth wall; 2126-Fifth wall; 213-End cover; 214-First arc surface; 215-Second arc surface; 22-Pressure relief component; 221-First groove; 2211-First groove segment; 2212-Second groove segment; 222-Predetermined pressure relief region; 223-Second groove; 224-First weak portion; 2241-Weak segment; 225-Second weak portion; 23-Electrode assembly; 231-Tab; 24-Electrode terminal; 25-Current collecting member; 200-Controller; 300-Motor; X-Thickness direction of first wall; Y-First direction; Z-Second direction.

## DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, carbon electrode, carbon, nickel or titanium and the like can be adopted. The composite current collector may include a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., $LiFePO_4$ (also abbreviated as LFP)), lithium iron phosphate-carbon composite, lithium manganese phosphate (e.g., $LiMnPO_4$), lithium manganese phosphate-carbon composite, lithium iron manganese phosphate, and lithium iron manganese phosphate-carbon composite. Examples of the lithium transition metal oxide may include, but are not limited to, at least one of a lithium-cobalt oxide (such as $LiCoO_2$), lithium-nickel oxide (such as $LiNiO_2$), lithium-manganese oxide (such as $LiMnO_2$ and $LiMn_2O_4$), lithium-nickel-cobalt oxide, lithium-manganese-cobalt oxide, lithium-nickel-manganese oxide, lithium-nickel-cobalt-manganese oxide (such as $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$)), lithium-nickel-cobalt-aluminum oxide (such as $LiNi_{0.85}Co_{0.15}Al_{0.05}O_2$) and their respective modified compounds.

In some embodiments, the positive electrode may adopt metal foam. The foam metal may be foam nickel, foam copper, foam aluminum, a foam alloy, etc. When the foam metal is used as the positive electrode, a surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

As an example, the negative electrode current collector may be a metal foil, foam metal, or a composite current collector. For example, as the metal foil, silver surface-treated aluminum or stainless steel, stainless steel, copper, aluminum, nickel, carbon electrode, nickel, titanium, or the like may be used. The foam metal may be foam nickel, foam copper, foam aluminum, a foam alloy, etc. The composite current collector may include a high molecular material substrate layer and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some implementations, the electrode assembly further includes a spacer, and the spacer is arranged between the positive electrode and the negative electrode.

In some implementations, the spacer is a separator. There may be various types of separators, and any well-known separator with a porous structure having good chemical stability and mechanical stability may be selected.

For example, the material of the separator may include at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some implementations, the spacer is a solid electrolyte. The solid electrolyte is arranged between the positive electrode and the negative electrode, and plays roles in transmitting ions and isolating the positive electrode from the negative electrode.

In some implementations, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some implementations, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate and lithium tetrafluoro(oxalato)phosphate.

In some implementations, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfone, ethyl methyl sulfone and diethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some implementations, the electrode assembly is of a wound structure. The positive electrode plate and the negative electrode plate are wound into the wound structure.

In some implementations, the electrode assembly is of a laminated structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some implementations, the electrode assembly is provided with a tab. The tab may conduct current out from the electrode assembly. The tabs include a positive tab and a negative tab.

In some implementations, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell in another shape. The prismatic battery cell includes, but is not limited to, a square-shell battery cell, a blade-shaped battery cell, and a polygon prism battery. For example, the polygon prism battery may be a hexagonal prism battery.

A battery mentioned in the embodiments of the present application refers a single physical module including one or more battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or the battery module is accommodated in the box.

In some embodiments, the box may be a part of a vehicle chassis structure. For example, a part of the box may become at least a part of a vehicle floor, or a part of the box may become at least a part of a cross beam and a longitudinal beam of a vehicle.

In some embodiments, the battery may be an energy storage apparatus. The energy storage apparatus includes an energy storage container, an energy storage cabinet, or the like.

The battery has outstanding advantages such as high energy density, low environmental pollution, high power density, long service life, wide application range, and low self-discharge coefficient, thus being an important component for the current development of new energy. Many design factors, such as energy density, cycle life, discharge capacity, charge-discharge rate and other performance parameters, should be considered in the development of the battery technology. In addition, the safety of the battery also needs to be taken into account.

For common battery cells, a pressure relief structure is usually disposed on the shell of the battery cell, so that the pressure relief structure can rupture during thermal runaway of the battery cell, so as to release the internal pressure of the battery cell, thereby ensuring the use safety of the battery cell. In the related art, in order to improve the structural strength and stability of the pressure relief structure disposed on the shell, and the pressure relief structure is usually formed on the shell by using an integrated forming process, such as a stamping process, so that a score groove is formed in the shell, so as to form the pressure relief structure on the shell. Moreover, in order to facilitate the pressure relief of the pressure relief structure, the score groove is usually set to be an "H" or "Y"-shaped structure, so that a region of the shell surrounded by the score groove can be flipped and opened after rupturing along the score groove, so as to increase the pressure relief area of the battery cell. However, due to the large thickness of the shell, even if the region of the shell surrounded by the score groove rupture along the score groove, it cannot be effectively flipped, as a result, the pressure relief area of the battery cell is still small, resulting in a low pressure relief rate of the battery cell when thermal runaway occurs, making the battery cell have the risk of fire and explosion or connection failure due to untimely pressure relief, which in turn leads to low use reliability of the battery cell.

Based on the above considerations, in order to solve the problem of low use reliability of the battery cell, an embodiment of the present application provides a battery cell, and the battery cell includes a shell and a pressure relief component. The shell includes a first wall. The pressure relief component is disposed on the first wall and is provided with a first groove, the first groove defines at least one predetermined pressure relief region, and the pressure relief component is configured to be capable of rupturing along at least part of the first groove during pressure relief of the battery cell. The pressure relief component is further provided with a second groove, the second groove and the first groove are arranged in a first direction, the second groove is located on one side of the first groove in the first direction, the first direction is perpendicular to a thickness direction of the first wall, and the second groove is configured to guide at least part of the predetermined pressure relief region to flip over to open at least part of the predetermined pressure relief region.

In the battery cell of such a structure, the pressure relief component is disposed on the first wall of the shell. The first groove and the second groove are formed in the pressure relief component, and the first groove defines the predetermined pressure relief region, so that the predetermined pressure relief region can be opened after the pressure relief component ruptures along at least part of the first groove, and can be flipped around a position where the second groove is located to release an internal pressure of the battery cell. By disposing the first groove and the second groove to be of a structure arranged in the first direction, the second groove and the first groove are of a structure that is just in contact or arranged at intervals, so that the second groove is located on one side of the first groove in the first direction. On the one hand, interference effect between the first groove and the second groove can be reduced, processing of the first groove and the second groove separately is facilitated, and a phenomenon that the second groove is torn when the first groove ruptures can be alleviated, which is beneficial to improve an effect of flipping the predetermined pressure relief region around the position where the second groove is located. On the other hand, the effect of flipping the predetermined pressure relief region around the position where the second groove is located after being opened can be improved, so as to expand a flipping angle of the predetermined pressure relief region, thereby increasing a pressure relief area of the battery cell, increasing a pressure relief rate of the battery cell when thermal runaway occurs, and then reducing a risk of fire, explosion or connection failure of the battery cell due to untimely pressure relief, which is beneficial to improve use reliability of the battery cell.

The battery cell disclosed in the embodiment of the present application may be used, but not limited to, in an electrical apparatus such as a vehicle, a ship, or an aircraft. A power source system of the electrical apparatus may be formed by the battery cell, the battery and the like disclosed in the present application, which is conducive to alleviating the problem of fire and explosion of the battery cell due to untimely pressure relief, so as to improve the use reliability of the battery cell.

An embodiment of the present application provides an electrical apparatus using a battery as a power source. The electrical apparatus may be, but is not limited to, a mobile phone, a tablet computer, a notebook computer, an electric toy, an electric tool, a battery car, an electric vehicle, a ship, a spacecraft, and the like. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For convenience of description, the following embodiments are illustrated by taking an example in which an electrical apparatus according to an embodiment of the present application is a vehicle.

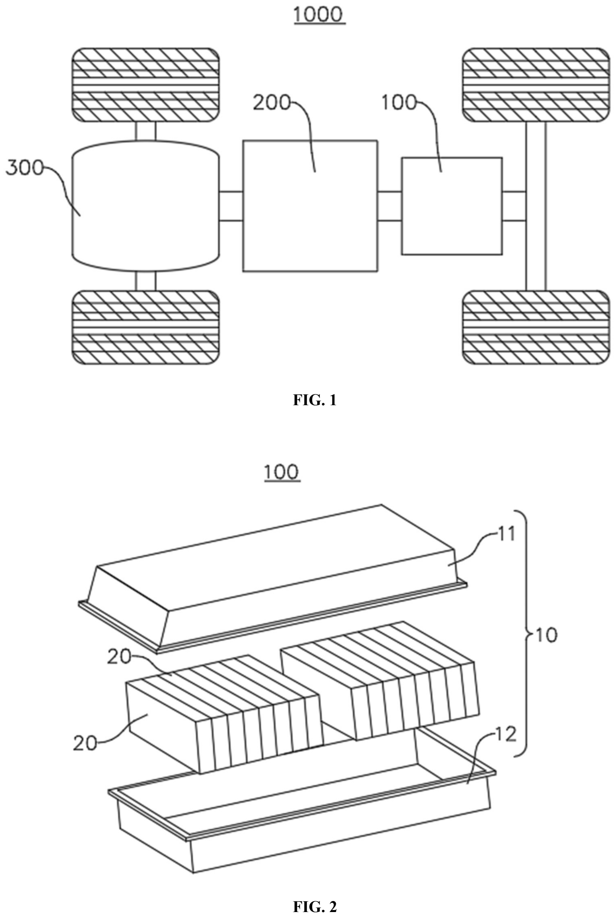

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended range electric vehicle, or the like. A battery 100 is provided in the vehicle 1000. The battery 100 may be arranged at the bottom of the vehicle 1000, or the head of the vehicle 1000, or the tail of the vehicle 1000. The battery 100 may be configured to supply power to the vehicle 1000. For example, the battery 100 may be used as an operating power source or usage power source for the vehicle 1000. The vehicle 1000 may further include a controller 200 and a motor 300. The controller 200 is used for controlling the battery 100 to supply power to the motor 300, for example, to satisfy the operating power demand when the vehicle 1000 is starting, navigating, and traveling.

In some embodiments of the present application, the battery 100 can not only be used as the operating power source or usage power source for the vehicle 1000, but also as the driving power source for the vehicle 1000 to replace or partially replace fuel or natural gas to provide driving power for the vehicle 1000.

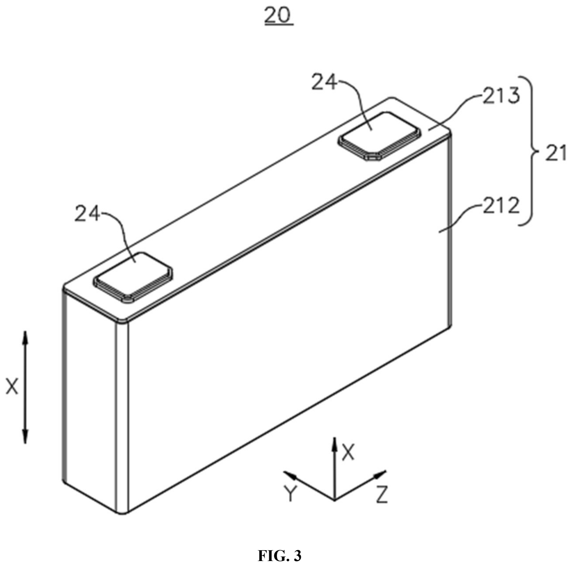

Referring to FIG. 2 and FIG. 3, FIG. 2 is an exploded structural view of a battery 100 according to some embodiments of the present application, and FIG. 3 is a schematic structural view of a battery cell 20 according to some embodiments of the present application. The battery 100 includes a box 10 and battery cells 20, and the battery cells 20 are accommodated in the box 10.

where the box 10 is configured to provide an assembling space for the battery cells 20, and the box 10 may be of various structures. In some embodiments, the box 10 may include a first box body 11 and a second box body 12. The first box body 11 and the second box body 12 cover each other, and the first box body 11 and the second box body 12 together define an assembling space for accommodating the battery cell 20. The second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box 10 formed by the first box body 11 and the second box body 12 may be in various shapes, such as a cylinder, a cuboid, or a cube. Exemplarily, in FIG. 2, the box 10 is in a cuboid shape.

In the battery 100, one battery cell 20 or a plurality of battery cells 20 may be arranged in the box 10. If a plurality of battery cells 20 are arranged in the box 10, the plurality of battery cells 20 may be connected in series, parallel or parallel-series connection, where the parallel-series connection means that some of the plurality of battery cells 20 are connected in series and some are connected in parallel. The plurality of battery cells 20 may be directly connected in series, parallel or parallel-series connection together, and then, the whole formed by the plurality of battery cells 20 is accommodated in the box 10. Of course, the battery 100 may also be in the form of a battery module composed of a plurality of battery cells 20 in series, parallel or parallel-series connection first, and then, a plurality of battery modules are connected in series, parallel or parallel-series connection to form a whole which is accommodated in the box 10.

In some embodiments, the battery 100 may further include other structures. For example, the battery 100 may further include a convergence component, and the plurality of battery cells 20 may be connected through the convergence component so as to achieve electrical connection between the plurality of battery cells 20.

Each battery cell 20 may be a secondary battery or a primary battery; or it may be a lithium-sulfur battery, a sodium-ion battery or a magnesium-ion battery, but is not limited thereto. The battery cell 20 may be in a shape of a cuboid, a cylinder, a prism or others. For example, in FIG. 3, the battery cell 20 is of a cuboid structure.

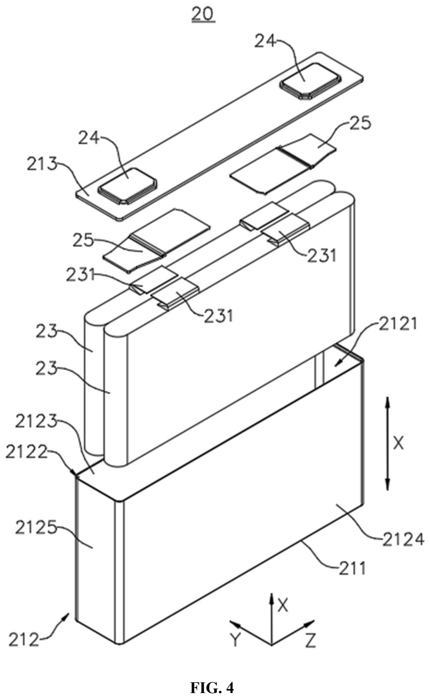

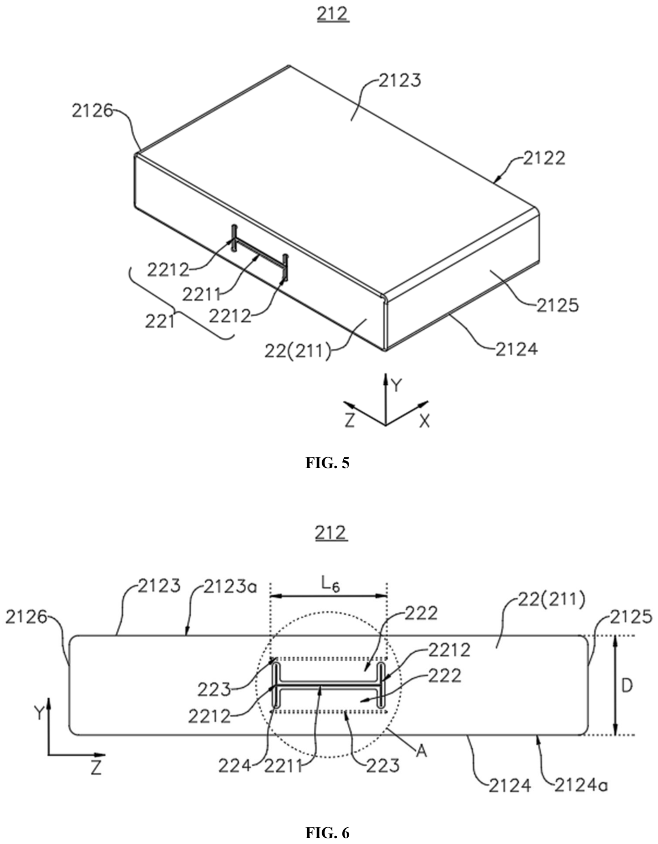

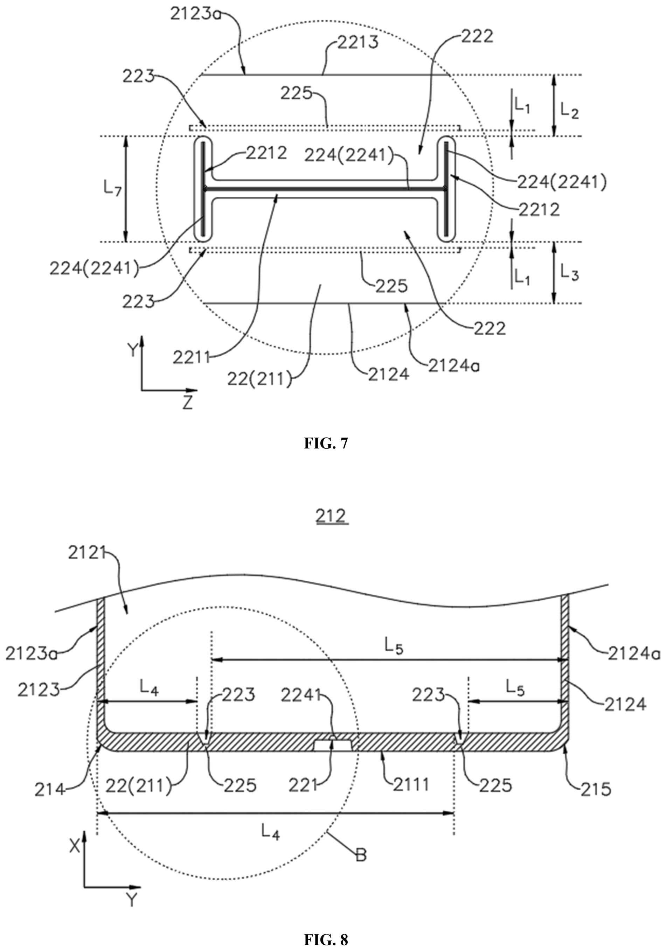

According to some embodiments of the present application, referring to FIG. 3, and further referring to FIG. 4, FIG. 5, FIG. 6, FIG. 7 and FIG. 8, where FIG. 4 is an exploded structural view of a battery cell 20 provided by some embodiments of the present application; FIG. 5 is a schematic structural diagram of a shell body 212 of a shell 21 of a battery cell 20 provided by some embodiments of the present application; FIG. 6 is a bottom view of a shell body 212 of a shell 21 of a battery cell 20 provided by some embodiments of the present application; FIG. 7 is a partial enlarged view at a position A of a shell body 212 shown in FIG. 6; and FIG. 8 is a partial section-view of a shell body 212 of a shell 21 of a battery cell 20 provided by some embodiments of the present application. The present application provides a battery cell 20, and the battery cell 20 includes a shell 21 and a pressure relief component 22. The shell 21 includes a first wall 211. The pressure relief component 22 is disposed on the first wall 211, the pressure relief component 22 is provided with a first groove 221, the first groove 221 defines at least one predetermined pressure relief region 222, and the pressure relief component 22 is configured to be capable of rupturing along at least part of the first groove 221 during pressure relief of the battery cell 20. The pressure relief component 22 is further provided with a second groove 223, the second groove 223 and the first groove 221 are arranged in a first direction Y, the second groove 223 is located on one side of the first groove 221 in the first direction Y, the first direction Y is perpendicular to a thickness direction X of the first wall, and the second groove 223 is configured to guide at least part of the predetermined pressure relief region 222 to flip over to open at least part of the predetermined pressure relief region 222.

Referring to FIG. 4, the battery cell 20 may further include an electrode assembly 23, and the electrode assembly 23 is accommodated in the shell 21. The electrode assembly 23 is a component in the battery cell 20 where an electrochemical reaction occurs. The structure of the electrode assembly 23 may be diversified. For example, the electrode assembly 23 may be a wound structure formed by winding a positive electrode plate, a spacer, and a negative electrode plate, or a stacked structure formed by stacking a positive electrode plate, a spacer, and a negative electrode plate.

Exemplarily, the spacer is a separator, and a main material of the separator may be selected from at least one of glass fiber, non-woven fabric, polyethylene, polypropylene, and polyvinylidene fluoride.

Optionally, one or more electrode assemblies 23 may be accommodated in the shell 21. Exemplarily, in FIG. 4, the shell 21 of the battery cell 20 is internally provided with two electrode assemblies 23, and the two electrode assemblies 23 are stacked in the thickness direction thereof. In other words, the two electrode assemblies 23 are stacked in the thickness direction of the battery cell 20. Of course, in other embodiments, the number of the electrode assemblies 23 accommodated in the shell 21 may also be one, three, four, five, six, seven, eight, or the like.

The shell 21 may further be used for accommodating an electrolyte, such as an electrolyte solution. The shell 21 may have various structural forms, such as a cylinder, a cuboid or a prism structure. Similarly, the shell 21 may also be made of various materials, such as copper, iron, aluminum, steel, or an aluminum alloy.

In some embodiments, the shell 21 may include a shell body 212 and an end cover 213. An accommodating cavity 2121 is formed in the shell body 212, the accommodating cavity 2121 is configured to accommodate the electrode assembly 23, and the accommodating cavity 2121 has an opening 2122. That is to say, the shell 212 is of a hollow structure having the opening 2122 at one end, and the end cover 213 covers the opening 2122 of the shell body 212 and forms a sealed connection to form a sealed space for accommodating the electrode assembly 23 and the electrolyte.

It should be noted that the first wall 211 provided with the pressure relief component 22 may be the end cover 213 of the shell 21, or may be one wall of the shell body 212 of the shell 21. Exemplarily, in FIG. 4, FIG. 5 and FIG. 6, the first wall 211 is a bottom wall of the shell body 212 disposed opposite to the end cover 213 in the thickness direction X of the first wall. The shell body 212 further includes a second wall 2123, a third wall 2124, a fourth wall 2125, and a fifth wall 2126 which are connected end to end in sequence, and one ends of the second wall 2123, the third wall 2124, the fourth wall 2125, and the fifth wall 2126 in the thickness direction X of the first wall are connected to the first wall 211. The other ends of the second wall 2123, the third wall 2124, the fourth wall 2125, and the fifth wall 2126 in the thickness direction X of the first wall are enclosed to form an opening 2122, so that the first wall 211, the second wall 2123, the third wall 2124, the fourth wall 2125 and the fifth wall 2126 enclose an accommodating cavity 2121 for accommodating the electrode assembly 23. The second wall 2123 and the third wall 2124 are disposed opposite to each other in the first direction Y, the fourth wall 2125 and the fifth wall 2126 are disposed opposite to each other in the second direction Z, the second direction Z is perpendicular to the first direction Y and the thickness direction X of the first wall, the first direction Y is a width direction of the first wall 211, and is also the thickness direction of the battery cell 20, and the second direction Z is a length direction of the first wall 211. Of course, the structure of the battery cell 20 is not limited thereto, in other embodiments, the first wall 211 may also be the end cover 213, and the first wall 211 may also be a side wall of the shell body 212 adjacent to and connected to the end cover 213.

When the battery cell 20 is assembled, the electrode assembly 23 may be placed in the shell body 212 first, the shell body 212 is filled with the electrolyte solution, and then the opening 2122 of the shell body 212 is covered by the end cover 213, so as to complete the assembling of the battery cell 20.

The shell body 212 may have various shapes, such as a cylinder, a cuboid or a prism structure. The shape of the shell body 212 may be determined according to the specific shape of the electrode assembly 23. For example, if the electrode assembly 23 is of a cylinder structure, the shell body 212 of a cylinder structure may be selected; and if the electrode assembly 23 is of a cuboid structure, the shell body 212 of a cuboid structure may be selected. Of course, the end cover 213 may also have various structures. For example, the end cover 213 may be a plate-like structure or a hollow structure with one end open. Exemplarily, in FIG. 4, the shell body 212 is of a cuboid structure, and the end cover 213 is of a rectangular plate-shaped structure.

Of course, it is understandable that the shell 21 is not limited to the above structure, and the shell 21 may also be of other structures. For example, the shell 21 may include a shell body 212 and two end covers 213, the shell body 212 is of a hollow structure with openings 2122 on two opposite sides, and one end cover 213 correspondingly covers one opening 2122 of the shell body 212 and forms a sealed connection, so as to form a sealed space for accommodating the electrode assembly 23 and the electrolyte. In other words, the openings 2122 are formed in the two opposite sides of the shell body 212, and the two end covers 213 respectively cover the two sides of the shell body 212 to close the corresponding openings 2122.

In some embodiments, referring to FIG. 3 and FIG. 4, the battery cell 20 may further include an electrode terminal 24. The electrode terminal 24 is installed on the shell 21 in an insulated manner, and the electrode terminal 24 is electrically connected to the electrode assembly 23, so as to output or input electric energy of the battery cell 20.

It should be noted that the electrode terminal 24 is installed on the shell 21 in an insulated manner, that is, no electrical connection is formed between the electrode terminal 24 and the shell 21.

In FIG. 3 and FIG. 4, the battery cell 20 includes two electrode terminals 24, and the two electrode terminals 24 are disposed in a second direction Z at intervals. Correspondingly, each electrode assembly 23 has two tabs 231, the two tabs 231 are arranged in the second direction Z at intervals, and the two tabs 231 have opposite polarities. The two electrode terminals 24 are electrically connected to the two tabs 231 of the electrode assembly 23 respectively, so as to realize the input or output of the positive electrode and negative electrode of the battery cell 20. It should be noted that the tabs 231 of the electrode assembly 23 are components formed by stacked connection of regions on the positive electrode plate that are not coated with a positive electrode active material layer or components formed by stacked connection of regions on the negative electrode plate that are not coated with a negative electrode active material layer. If the tabs 231 are used to output the positive electrode of the electrode assembly 23, the tabs 231 are the components formed by stacked connection of the regions on the positive electrode plate that are not coated with the positive electrode active material layer. If the tabs 231 is used to output the negative electrode of the electrode assembly 23, the tabs 231 are the components formed by stacked connection of the regions on the negative electrode plate that are not coated with the negative electrode active material layer.

Exemplarily, the material of the electrode terminal 24 may also be various. For example, the material of the electrode terminal 24 may be copper, iron, aluminum, steel, an aluminum alloy or the like.

Optionally, the electrode terminal 24 may be installed on the shell 21 in various structures. Exemplarily, in FIG. 3 and FIG. 4, the two electrode terminals 24 are both installed on the end cover 213 of the shell 21. Of course, the structure of the battery cell 20 is not limited to this. in other embodiments, the two electrode terminals 24 may also be installed on the shell body 212 of the shell 21. Similarly, for the two electrode terminals 24, one electrode terminal 24 may be installed on the shell body 212 of the shell 21, and the other electrode terminal 24 may be installed on the end cover 213 of the shell 21.

In some embodiments, referring to FIG. 4, the battery cell 20 may further include two current collecting members 25. The two current collecting members 25 are disposed in the shell 21, and each current collecting member 25 is used to connect one electrode terminal 24 and a plurality of tabs 231 with the same polarity in the electrode assembly 23 to achieve an electrical connection between the electrode terminal 24 and the electrode assembly 23, which is beneficial to reduce the difficulty of assembly between the tabs 231 and the electrode terminal 24.

Exemplarily, the material of the current collecting member 25 may also be various. For example, the material of the current collecting member 25 may be copper, iron, aluminum, steel, an aluminum alloy or the like.

In the embodiment of the present application, the pressure relief component 22 functions to release a pressure in the battery cell 20, and is configured to release the internal pressure of the battery cell 20 when the internal pressure or temperature of the battery cell 20 reaches a predetermined value.

Optionally, the structure of the pressure relief component 22 can be various. Exemplarily, referring to FIG. 5, FIG. 6 and FIG. 8, the pressure relief component 22 and the first wall 211 of the shell 21 are of an integrally formed structure, that is, the pressure relief component 22 is the first wall 211 of the shell 21. That is to say, the pressure relief component 22 is integrated on the first wall 211 and forms one wall of the shell 21, which is equivalent to the first groove 221 and the second groove 223 being directly disposed on the first wall 211. Of course, in other embodiments, the pressure relief component 22 may also be a structure that is separately disposed from the first wall 211 of the shell 21. That is to say, a pressure relief hole for installing the pressure relief component 22 is disposed on the first wall 211 of the shell 21, and the pressure relief component 22 is connected to the first wall 211 and covers the pressure relief hole. There may be various connection manners between the pressure relief component 22 and the first wall 211, such as welding or clamping.

The pressure relief component 22 is provided with a first groove 221, the first groove 221 plays a role in pressure relief. When the internal pressure or temperature of the battery cell 20 reaches a predetermined value, the pressure relief component 22 can rupture along a position where the first groove 221 is located, so as to open the predetermined pressure relief region 222 defined by the first groove 221 to release the internal pressure of the battery cell 20.

The first groove 221 defines at least one predetermined pressure relief region 222, that is, at least one predetermined pressure relief region 222 is formed in the region where the first groove 221 is located. Exemplarily, in FIG. 6 and FIG. 7, the first groove 221 defines two predetermined pressure relief regions 222, and the two predetermined pressure relief regions 222 are arranged in the first direction Y at intervals. The first groove 221 is a structure set along an edge of the predetermined pressure relief region 222, so that a setting trajectory of the first groove 221 is set along the edge of the predetermined pressure relief region 222, and thus the pressure relief component 22 can rupture along the edge of the predetermined pressure relief region 222.

The pressure relief component 22 is configured to be capable of rupturing along at least part of the first groove 221 during pressure relief of the battery cell 20. That is, when the battery cell 20 undergoes thermal runaway and releases the internal pressure, the region where the pressure relief component 22 is provided with the first groove 221 can rupture, thereby allowing the predetermined pressure relief region 222 to be opened to release the internal pressure of the battery cell 20.

Exemplarily, as shown in FIG. 8, in the thickness direction X of the first wall, the first groove 221 is disposed on one side of the pressure relief component 22 facing away from an interior of the shell 21. That is, the first groove 221 is disposed on one side of the pressure relief component 22 facing away from the electrode assembly 23. Of course, in other embodiments, the first groove 221 may also be disposed on one side of the pressure relief component 22 facing the interior of the shell 21. That is, the first groove 221 is disposed on one side of the pressure relief component 22 facing the electrode assembly 23.

The pressure relief component 22 is also provided with a second groove 223, the second groove 223 and the first groove 221 are arranged in the first direction Y, and the second groove 223 is located on one side of the first groove 221 in the first direction Y. That is, the second groove 223 and the first groove 221 are of structures disposed in the first direction Y. That is to say, in the first direction Y, at least one side of the first groove 221 is provided with the second groove 223, and the second groove 223 may be a structure that is in contact with or spaced apart from the first groove 221.

Exemplarily, in FIG. 6 and FIG. 7, the first groove 221 defines the two predetermined pressure relief regions 222 arranged in the first direction Y at intervals. Correspondingly, both sides of the first groove 221 in the first direction Y are provided with the second grooves 223, so that the first groove 221 is located between the two second grooves 223 in the first direction Y, and each predetermined pressure relief region 222 corresponds to one second groove 223.

The second groove 223 is configured to guide at least part of the predetermined pressure relief region 222 to flip over to open at least part of the predetermined pressure relief region 222. That is, after the pressure relief component 22 ruptures along the first groove 221 and causes the predetermined pressure relief region 222 to be opened, at least part of the predetermined pressure relief region 222 can be flipped with the groove bottom wall of the second groove 223 as an axis, so that after the predetermined pressure relief region 222 is flipped, the interior of the shell 21 and an exterior of the shell 21 communicate with each other for pressure relief.

Exemplarily, as shown in FIG. 8, in the thickness direction X of the first wall, the second groove 223 is disposed on one side of the pressure relief component 22 facing the interior of the shell 21. That is, the second groove 223 is disposed on one side of the pressure relief component 22 facing the electrode assembly 23. Of course, in other embodiments, the second groove 223 may also be disposed on one side of the pressure relief component 22 facing away from the interior of the shell 21. That is, the second groove 223 is disposed on one side of the pressure relief component 22 facing away from the electrode assembly 23.

Exemplarily, the first groove 221 may be formed by a processing technique such as stamping or milling. Similarly, the second groove 223 may also be formed by a processing technique such as stamping or milling.

In some embodiments, in the thickness direction X of the first wall, a ratio of a maximum groove depth of the first groove 221 to a thickness of the first wall 211 is greater than or equal to 0.16 and less than 1. It should be noted that in an embodiment where the first groove 221 includes only one smooth groove segment, the maximum groove depth of the first groove 221 is a maximum depth of the groove segment; and in an embodiment where the first groove 221 includes a plurality of smooth groove segments, the maximum groove depth of the first groove 221 is a maximum groove depth of the groove segment with the largest depth among the plurality of groove segments.

Exemplarily, the ratio of the maximum groove depth of the first groove 221 in the thickness direction X of the first wall to the thickness of the first wall 211 in the thickness direction X of the first wall may be any point value among 0.16, 0.18, 0.2, 0.22, 0.25, 0.28, 0.3, 0.32, 0.35, 0.38, 0.4, 0.42, 0.45, 0.48, 0.5, 0.62, 0.65, 0.68, 0.7, 0.72, 0.75, 0.78, 0.8, 0.82, 0.85, 0.88, 0.9, 0.92, 0.95, 0.98, 0.99, etc., or a range value between any two thereof.

In some embodiments, in the thickness direction X of the first wall, the maximum groove depth of the first groove 221 is greater than or equal to 0.4 mm and less than or equal to 2 mm, and the thickness of the first wall 211 is greater than or equal to 0.8 mm and less than or equal to 2.5 mm.

In the thickness direction X of the first wall, the maximum groove depth of the first groove 221 may be any point value among 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, etc., or a range value between any two thereof.

In the thickness direction X of the first wall, the thickness of the first wall 211 may be any point value among 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, 2.05 mm, 2.1 mm, 2.15 mm, 2.2 mm, 2.25 mm, 2.3 mm, 2.35 mm, 2.4 mm, 2.45 mm, 2.5 mm, etc., or a range value between any two thereof.

In the present embodiment, the pressure relief component 22 is disposed on the first wall 211 of the shell 21. The first groove 221 and the second groove 223 are formed in the pressure relief component 22, and the first groove 221 defines the predetermined pressure relief region 222, so that the predetermined pressure relief region 222 can be opened after the pressure relief component 22 ruptures along at least part of the first groove 221, and can be flipped around a position where the second groove 223 is located to release an internal pressure of the battery cell 20. By disposing the first groove 221 and the second groove 223 to be of a structure arranged in the first direction Y, the second groove 223 and the first groove 221 are of a structure that is just in contact or arranged at intervals, so that the second groove 223 is located on one side of the first groove 221 in the first direction Y. On the one hand, interference effect between the first groove 221 and the second groove 223 can be reduced, processing of the first groove 221 and the second groove 223 separately is facilitated, and a phenomenon that the second groove 223 is torn when the first groove 221 ruptures can be alleviated, which is beneficial to improve an effect of flipping the predetermined pressure relief region 222 around the second groove 223. On the other hand, the effect of flipping the predetermined pressure relief region 222 around the position where the second groove 223 is located after being opened can be improved, so as to expand a flipping angle of the predetermined pressure relief region 222, thereby increasing a pressure relief area of the battery cell 20, increasing a pressure relief rate of the battery cell 20 when thermal runaway occurs, and then reducing a risk of fire, explosion or connection failure of the battery cell 20 due to untimely pressure relief, which is beneficial to improve use reliability of the battery cell 20.

According to some embodiments of the present application, referring to FIG. 6 and FIG. 7, the first groove 221 and the second groove 223 are disposed in the first direction Y at Y intervals. That is, orthographic projections of the first groove 221 and the second groove 223 in a plane perpendicular to the thickness direction X of the first wall are arranged in the first direction Y at intervals, so that in the first direction Y, the projection of the first groove 221 in the thickness direction X of the first wall and the projection of the second groove 223 in the thickness direction X of the first wall are arranged at intervals. That is, the second groove 223 is located on one side of the first groove 221 in the first direction Y, and there is a gap between the second groove and the first groove.

Exemplarily, in FIG. 7, the pressure relief component 22 is provided with two second grooves 223. The two second grooves 223 are arranged in the first direction Y at intervals and are respectively located on two sides of the first groove 221 in the first direction Y, and the two second grooves 223 and the first groove 221 are arranged in the first direction Y at intervals.

In the present embodiment, by disposing the first groove 221 and the second groove 223 to be of a structure arranged at intervals in the first direction Y, the first groove 221 is not in contact with the second groove 223. On the one hand, mutual influence between the first groove 221 and the second groove 223 during processing can be reduced, and stress influence between a region where the pressure relief component 22 is provided with the first groove 221 and a region where the pressure relief component 22 is provided with the second groove 223 can be reduced. On the other hand, a phenomenon of tearing the second groove 223 when the first groove 221 ruptures can be further alleviated, which is beneficial to improve the effect of flipping the predetermined pressure relief region 222 around the second groove 223.

According to some embodiments of the present application, referring to FIG. 7, in the first direction Y, a minimum distance between a projection of the first groove 221 in the thickness direction X of the first wall and a projection of second groove 223 in the thickness direction X of the first wall is $L_1$, which meets that $0.1\ mm \leq L_1 \leq 4\ mm$. That is, the minimum distance between the first groove 221 and the second groove 223 in the first direction Y is $L_1$, that is, a size of a minimum gap between the first groove 221 and the second groove 223 in the first direction Y is in a range from 0.1 mm to 4 mm.

Exemplarily, the minimum distance $L_1$ between the projection of the first groove 221 in the thickness direction X of the first wall and the projection of second groove 223 in the thickness direction X of the first wall may be 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.5 mm, 1.6 mm, 1.8 mm, 2 mm, 2.2 mm, 2.5 mm, 2.8 mm, 3 mm, 3.5 mm or 4 mm, or the like.

It should be noted that in an embodiment that the pressure relief component 22 is provided with two second grooves 223 and the two second grooves 223 are respectively located on two sides of the first groove 221 in the first direction Y, as shown in FIG. 7, the minimum distance between the two second grooves 223 and the first groove 221 in the first direction Y is $L_1$.

In the present embodiment, by setting the minimum distances of the projections of the first groove 221 and the second groove 223 in the thickness direction X of the first wall in the first direction Y to be in a range from 0.1 mm to 4 mm, the minimum distances of the first groove 221 and the second groove 223 in the first direction Y are in a range from 0.1 mm to 4 mm. On the one hand, the minimum distances of the projections of the first groove 221 and the second groove 223 in the thickness direction X of the first wall in the first direction Y are set to be greater than or equal to 0.1 mm to reduce the interference effect between the first groove 221 and the second groove 223, which is conducive to reducing difficulty of processing the first groove 221 and the second groove 223 on the pressure relief component 22, and can further alleviate a phenomenon that the second groove 223 is torn when the first groove 221 ruptures. On the other hand, the minimum distances of the projections of the first groove 221 and the second groove 223 in the thickness direction X of the first wall in the first direction Y are set to be less than or equal to 4 mm to increase an angle of the predetermined pressure relief region 222 flipping around the second groove 223 and the pressure relief area after the predetermined pressure relief region 222 is opened, thereby further increasing the pressure relief rate of the battery cell 20 when thermal runaway occurs.

In some embodiments, continue referring to FIG. 7, in the first direction Y, the minimum distance of the projections of the first groove 221 and the second groove 223 in the thickness direction X of the first wall in the first direction Y is $L_1$, which meets that 0.2 mm$\leq L_1 \leq$2 mm. That is, the size of the minimum gap between the first groove 221 and the second groove 223 in the first direction Y is in a range from 0.2 mm to 2 mm.

In the present embodiment, by setting the minimum distances of the projections of the first groove 221 and the second groove 223 in the thickness direction X of the first wall in the first direction Y to be in a range from 0.2 mm to 2 mm, the minimum distances of the first groove 221 and the second groove 223 in the first direction Y are in a range from 0.2 mm to 2 mm. On the one hand, the minimum distances of the projections of the first groove 221 and the second groove 223 in the thickness direction X of the first wall in the first direction Y are further set to be greater than or equal to 0.2 mm to further reduce the interference effect between the first groove 221 and the second groove 223, which is conducive to further reducing difficulty of processing the first groove 221 and the second groove 223 on the pressure relief component 22, and can further alleviate a phenomenon that the second groove 223 is torn when the first groove 221 ruptures. On the other hand, the minimum distances of the projections of the first groove 221 and the second groove 223 in the thickness direction X of the first wall in the first direction Y are set to be less than or equal to 2 mm to further increase the angle of the predetermined pressure relief region 222 flipping around the second groove 223 and the pressure relief area after the predetermined pressure relief region 222 is opened, thereby further increasing the pressure relief rate of the battery cell 20 when thermal runaway occurs. Thus, the battery cell 20 can further improve a flipping effect around the position where the second groove 223 is located after the predetermined pressure relief region 222 is opened while alleviating synchronous tearing of the second groove 223 by the first groove 221.

According to some embodiments of the present application, referring to FIG. 5, FIG. 6, FIG. 7 and FIG. 8, the shell 21 may further include a second wall 2123 and a third wall 2124 which are disposed opposite to each other in the first direction Y, the first wall 211 is connected with the second wall 2123 and the third wall 2124, in the first direction Y, the second wall 2123 has a first outer surface 2123a facing away from the interior of the shell 21, and the third wall 2124 has a second outer surface 2124a facing away from the interior of the shell 21. In the first direction Y, the second groove 223 is formed between the first groove 221 and the first outer surface 2123a.

The shell 21 may further include a second wall 2123 and a third wall 2124 which are disposed opposite to each other in the first direction Y. That is, the second wall 2123 and the third wall 2124 of the shell 21 are of structures arranged in the first direction Y at intervals. Exemplarily, the shell 21 is a cuboid structure. Correspondingly, the second wall 2123 and the third wall 2124 are two walls of the shell 21 disposed opposite to each other in the first direction Y, and the thickness direction of the second wall 2123 and the thickness direction of the third wall 2124 are both the first direction Y.

The first wall 211 is connected with the second wall 2123 and the third wall 2124. That is, two ends of the first wall 211 in the first direction Y are connected to the second wall 2123 and the third wall 2124 respectively.

In the first direction Y, the second groove 223 is disposed between the first groove 221 and the first outer surface 2123a. That is, the first outer surface 2123a, the second groove 223 and the first groove 221 are of structures sequentially arranged in the first direction Y. Exemplarily, in FIG. 7, the first outer surface 2123a, the second groove 223, and the first groove 221 are all arranged in the first direction Y at intervals.

In the present embodiment, when the second groove 223 is formed between the first groove 221 and the first outer surface 2123a of the second wall 2123, the second groove 223 is closer to the first outer surface 2123a of the second wall 2123 than the first groove 221, so that rigidity of the position where the pressure relief component 22 is provided with the second groove 223 is greater than rigidity of a position where the pressure relief component 22 is provided with the first groove 221. Therefore, when the battery cell 20 releases the internal pressure, deformation of the pressure relief component 22 at a position where the first groove 221 is located is greater than deformation of the pressure relief component 22 at the position where the second groove 223 is located, which is conducive to making a region where the pressure relief component 22 is provided with the first groove 221 rupture and release the internal pressure of the battery cell 20 prior to a region where the pressure relief component 22 is provided with the second groove 223. On the one hand, a phenomenon of poor pressure relief effect of the battery cell 20 due to the fact that the pressure relief component 22 ruptures from the region where the second groove 223 is provided can be alleviated. On the other hand, a situation that the predetermined pressure relief region 222 is stably flipped open under the guidance of a groove bottom wall of the second groove 223 can be achieved.

In some embodiments, referring to FIG. 6, FIG. 7 and FIG. 8, in the first direction Y, the second groove 223 may also be formed between the first groove 221 and the second outer surface 2124a. That is, the second outer surface 2124a, the second groove 223 and the first groove 221 are of structures sequentially arranged in the first direction Y.

Exemplarily, in FIG. 7, the second outer surface 2124a, the second groove 223, and the first groove 221 are all arranged in the first direction Y at intervals.

Exemplarily, in FIG. 6 and FIG. 7, in the first direction Y, the second grooves 223 are formed between the first groove 221 and the first outer surface 2123a as well as between the first groove 221 and the second outer surface 2124a. That is, the pressure relief component 22 is provided with the two second grooves 223 arranged in the first direction Y at intervals, and the first groove 221 is located between the two second grooves 223, so that the two second grooves 223 are respectively located on two sides of the first groove 221.

In the present embodiment, when the second groove 223 is formed between the first groove 221 and the second outer surface 2124a of the third wall 2124, the second groove 223 is closer to the second outer surface 2124a of the third wall 2124 than the first groove 221, so that rigidity of the position where the pressure relief component 22 is provided with the second groove 223 is greater than rigidity of a position where the pressure relief component 22 is provided with the first groove 221. Therefore, when the battery cell 20 releases the internal pressure, deformation of the pressure relief component 22 at a position where the first groove 221 is located is greater than deformation of the pressure relief component 22 at the position where the second groove 223 is located, which is conducive to making a region where the pressure relief component 22 is provided with the first groove 221 rupture and release the internal pressure of the battery cell 20 prior to a region where the pressure relief component 22 is provided with the second groove 223. On the one hand, a phenomenon of poor pressure relief effect of the battery cell 20 due to the fact that the pressure relief component 22 ruptures from the region where the second groove 223 is provided can be alleviated. On the other hand, a situation that the predetermined pressure relief region 222 is stably flipped open under the guidance of a groove bottom wall of the second groove 223 can be achieved.

According to some embodiments of the present application, referring to FIG. 8, in the thickness direction X of the first wall, the first wall 211 has a third outer surface 2111 facing away from the interior of the shell 21, and the third outer surface 2111 is connected to the first outer surface 2123a via a first arc surface 214. In the first direction Y, the second groove 223 is located between the first arc surface 214 and the first groove 221.

The third outer surface 2111 is connected to the first outer surface 2123a through the first arc surface 214. That is, a position where the third outer surface 2111 of the first wall 211 and the first outer surface 2123a of the second wall 2123 are connected to each other is of an arc transition structure, so that the first arc surface 214 is formed between the third outer surface 2111 of the first wall 211 and the first outer surface 2123a of the second wall 2123, and thus a rounded corner structure is formed between the first wall 211 and the second wall 2123.

In the first direction Y, the second groove 223 is located between the first arc surface 214 and the first groove 221. That is, the first arc surface 214, the second groove 223 and the first groove 221 are of structures sequentially arranged in the first direction Y.

Exemplarily, in FIG. 8, the first arc surface 214 and second groove 223 are arranged in the first direction Y at intervals.

In the present embodiment, by disposing the second groove 223 between the first groove 221 and the first arc surface 214 in the first direction Y, the second groove 223 is not in contact with a corner of the shell 21, so as to reduce influence of stress at the corner of the shell 21 on the region where the second groove 223 is located, and can reduce processing difficulty of the second groove 223.

According to some embodiments of the present application, continue referring to FIG. 8, in the thickness direction X of the first wall, the first wall 211 has a third outer surface 2111 facing away from the interior of the shell 21, and the third outer surface 2111 is connected to the second outer surface 2124a via second arc surface 215. In the first direction Y, the second groove 223 is located between the second arc surface 215 and the first groove 221.

The third outer surface 2111 is connected to the second outer surface 2124a through the second arc surface 215. That is, a position where the third outer surface 2111 of the first wall 211 and the second outer surface 2124a of the third wall 2124 are connected to each other is of an arc transition structure, so that the second arc surface 215 is formed between the third outer surface 2111 of the first wall 211 and the second outer surface 2124a of the third wall 2124, and thus a rounded corner structure is formed between the first wall 211 and the third wall 2124.

In the first direction Y, the second groove 223 is located between the second arc surface 215 and the first groove 221. That is, the second arc surface 215, the second groove 223 and the first groove 221 are of structures sequentially arranged in the first direction Y.

Exemplarily, in FIG. 8, the second arc surface 215 and second groove 223 are arranged in the first direction Y at intervals.

In the present embodiment, by disposing the second groove 223 between the first groove 221 and the second arc surface 215 in the first direction Y, the second groove 223 is not in contact with a corner of the shell 21, so as to reduce influence of stress at the corner of the shell 21 on the region where the second groove 223 is located, and can reduce processing difficulty of the second groove 223.

According to some embodiments of the present application, referring to FIG. 6 and FIG. 7, in the first direction Y, a difference between the minimum distance $L_2$ from the first groove 221 to the first outer surface 2123a and the minimum distance $L_3$ from the first groove 221 to the second outer surface 2124a is greater than or equal to 0, and a difference between the minimum distance $L_2$ from the first groove 221 to the first outer surface 2123a and the minimum distance $L_3$ from the first groove 221 to the second outer surface 2124a is less than or equal to 0.1 times a distance D between the first outer surface 2123a and the second outer surface 2124a. That is, a difference obtained by subtracting the smaller one from the larger one of $L_2$ and $L_3$ is greater than or equal to 0 and less than or equal to 0.1 times D. That is, in the first direction Y, the distance between the first outer surface 2123a and the second outer surface 2124a is D, the minimum distance between the first groove 221 and the first outer surface 2123a is $L_2$, and the minimum distance between the first groove 221 and the second outer surface 2124a is $L_3$, which meets that $0 \leq |L_2 - L_3|/D \leq 0.1$.

D represents the distance between the first outer surface 2123a and the second outer surface 2124a in the first direction Y, and is also a thickness of the shell 21 of the battery cell 20 in the first direction Y. During measurement, multiple measurements may be performed to obtain an average value.

$L_2$ represents the minimum distance between the first groove 221 and the first outer surface 2123a. That is, the minimum distance between the projection of the first groove 221 in a plane perpendicular to the thickness direction X of the first wall and the first outer surface 2123a is $L_2$. During measurement, the distance between the position of the first groove 221 closest to the first outer surface 2123a in the first direction Y and the first outer surface 2123a can be measured, and multiple measurements can be performed to obtain the average value to reduce measurement errors.

$L_3$ represents the minimum distance between the first groove 221 and the second outer surface 2124a. That is, the minimum distance between the projection of the first groove 221 in a plane perpendicular to the thickness direction X of the first wall and the second outer surface 2124a is $L_3$. During measurement, the distance between the position of the first groove 221 closest to the second outer surface 2124a in the first direction Y and the second outer surface 2124a can be measured, and multiple measurements can be performed to obtain the average value to reduce measurement errors.

$|L_2 - L_3|/D$ represents a ratio of the difference between the minimum distance between the first groove 221 and the first outer surface 2123a in the first direction Y and the minimum distance between the first groove 221 and the second outer surface 2124a in the first direction Y to the distance between the first outer surface 2123a and the second outer surface 2124a.

$0 \leq |L_2 - L_3|/D \leq 0.1$ characterizes that the distance from the first groove 221 to the first outer surface 2123a and the distance from the first groove 221 to the second outer surface 2124a are slightly different, that is, the first groove 221 is substantially located at a center of the first wall 211 in the first direction Y.

A value of $|L_2 - L_3|/D$ may be: 0, 0.01, 0.02, 0.03, 0.04, 0.05, 0.06, 0.07, 0.08, 0.09 or 0.1, etc.

In the present embodiment, by setting the ratio of the difference between the minimum distance $L_2$ between the first groove 221 and the first outer surface 2123a and the minimum distance $L_3$ between the first groove 221 and the second outer surface 2124a to the distance D between the first outer surface 2123a and the second outer surface 2124a to be in a range from 0 to 0.1, the first groove 221 is located in a middle region of the first wall 211 in the first direction Y, which is conducive to alleviating a phenomenon that the first groove 221 deviates excessively from a center position of the first wall 211 in the first direction Y. On the one hand, it is convenient to dispose the second groove 223 on one side of the first groove 221 in the first direction Y, which is conducive to reducing the difficulty of disposing the second groove 223 on the pressure relief component 22. On the other hand, a region where the pressure relief component 22 is provided with the first groove 221 is more prone to rupturing for pressure relief, so that under the same blasting pressure, a residual thickness of the region where the pressure relief component 22 is provided with the first groove 221 can be increased to improve fatigue resistance of the pressure relief component 22, thereby effectively prolonging the service life and improving use reliability of the battery cell 20.

In some embodiments, in the first direction Y, the minimum distance between the first groove 221 and the first outer surface 2123a is $L_2$, which meets that $2\ mm \leq L_2 \leq 12mm$.

Exemplarily, the minimum distance $L_2$ of the first groove 221 and the first outer surface 2123a in the first direction Y may be 2 mm, 2.2 mm, 2.5 mm, 2.8 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, or the like.

In the present embodiment, by setting the minimum distance between the first groove 221 and the first outer surface 2123a to be in a range from 2 mm to 12 mm, on the one hand, the minimum distance between the first groove 221 and the first outer surface 2123a is set to be greater than or equal to 2 mm, so as to alleviate a phenomenon of large difficulty of disposing the second groove 223 between the first groove 221 and the first outer surface 2123a due to excessive small spacing between the first groove 221 and the first outer surface 2123a, and reduce a stress concentration phenomenon. On the other hand, the minimum distance between the first groove 221 and the first outer surface 2123a is set to be less than or equal to 12 mm, so as to reduce a phenomenon of space waste between the first groove 221 and the first outer surface 2123a, thereby alleviating a phenomenon that an area of the region where the pressure relief component 22 is provided with the first groove 221 is limited, which is beneficial to increase the area of the region of the pressure relief component 22 used to be provided with the first groove 221.

In some embodiments, in the first direction Y, the minimum distance between the first groove 221 and the second outer surface 2124a is $L_3$, which meets that 2 mm $\leq L_3 \leq$ 12mm.

Exemplarily, the minimum distance $L_3$ of the first groove 221 and the second outer surface 2124a in the first direction Y may be 2 mm, 2.2 mm, 2.5 mm, 2.8 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, or the like.

In the present embodiment, by setting the minimum distance between the first groove 221 and the second outer surface 2124a to be in a range from 2 mm to 12 mm, on the one hand, the minimum distance between the first groove 221 and the second outer surface 2124a is set to be greater than or equal to 2 mm, so as to alleviate a phenomenon of large difficulty of disposing the second groove 223 between the first groove 221 and the second outer surface 2124a due to excessive small spacing between the first groove 221 and the second outer surface 2124a, and reduce a stress concentration phenomenon. On the other hand, the minimum distance between the first groove 221 and the second outer surface 2124a is set to be less than or equal to 12 mm, so as to reduce a phenomenon of space waste between the first groove 221 and the second outer surface 2124a, thereby alleviating a phenomenon that an area of the region where the pressure relief component 22 is provided with the first groove 221 is limited, which is beneficial to increase the area of the region of the pressure relief component 22 used to be provided with the first groove 221.

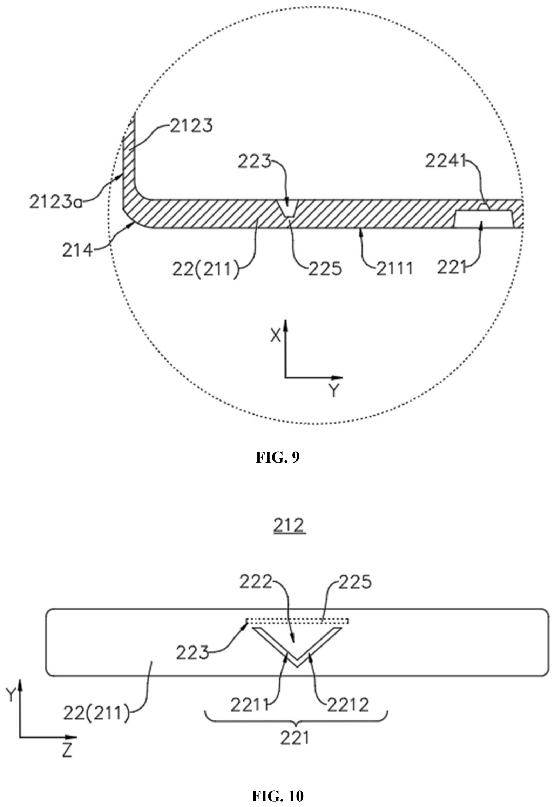

According to some embodiments of the present application, referring to FIG. 6, FIG. 7 and FIG.8, and further referring to FIG.9, FIG. 9 is a partial enlarged diagram of a position B of the shell 212 shown in FIG. 8. In the first direction Y, a difference between the minimum distance $L_4$ from the second groove 223 to the first outer surface 2123a and the minimum distance $L_5$ from the second groove 223 to the second outer surface 2124a is greater than or equal to 0.4 times the distance D between the first outer surface 2123a and the second outer surface 2124a. That is, a difference obtained by subtracting the smaller one from the larger one of $L_4$ and $L_5$ is greater than or equal to 0.4 times D. That is, in the first direction Y, the distance between the first outer surface 2123a and the second outer surface 2124a is D, and the minimum distances from the second groove 223 to the first outer surface 2123a and the second outer surface 2124a are $L_4$ and $L_5$, which meets that $|L_5 - L_4|/D \geq 0.4$. A first weak portion 224 is formed at a bottom of the first groove 221, the pressure relief component 22 is configured to be capable of rupturing along at least part of the first weak portion 224 during pressure relief of the battery cell 20, the first weak portion 224 includes at least one weak segment 2241, a second weak portion 225 is formed at a bottom of the second groove 223, a cross-sectional area $S_2$ of the second weak portion 225 perpendicular to its extension direction is greater than 0.7 times a cross-sectional area $S_1$ of the weak segment 2241 perpendicular to its extension direction, and the cross-sectional area $S_2$ of the second weak portion 225 perpendicular to its extension direction is less than or equal to 1.5 times the cross-sectional area $S_1$ of the weak segment 2241 perpendicular to its extension direction. That is, the cross-sectional area of the weak segment 2241 perpendicular to its extension direction is $S_1$, and the cross-sectional area of the second weak portion 225 perpendicular to its extension direction is $S_2$, which meets that $0.7 < S_2/S_1 \leq 1.5$.

$L_4$ represents the minimum distance between the second groove 223 and the first outer surface 2123a. That is, the minimum distance between the projection of the second groove 223 in a plane perpendicular to the thickness direction X of the first wall and the first outer surface 2123a is $L_4$. During measurement, the distance between the position of the second groove 223 closest to the first outer surface 2123a and the first outer surface 2123a can be measured, and multiple measurements can be performed to obtain the average value to reduce measurement errors.

$L_5$ represents second minimum distance between the second groove 223 and the second outer surface 2124a. That is, the minimum distance between the projection of the second groove 223 in a plane perpendicular to the thickness direction X of the first wall and the second outer surface 2124a is $L_5$. During measurement, the distance between the position of the second groove 223 closest to the second outer surface 2124a and the second outer surface 2124a can be measured, and multiple measurements can be performed to obtain the average value to reduce measurement errors.

It should be noted that, referring to FIG. 8, in an embodiment where the pressure relief component 22 is provided with two second grooves 223, the minimum distance between any second groove 223 and the first outer surface 2123a in the first direction Y is $L_4$, and the minimum distance between any second groove 223 and the second outer surface 2124a in the first direction Y is $L_5$.

$|L_5 - L_4|/D$ represents a ratio of the difference between the minimum distance between the second groove 223 and the first outer surface 2123a in the first direction Y and the minimum distance between the second groove 223 and the second outer surface 2124a in the first direction Y to the distance between the first outer surface 2123a and the second outer surface 2124a.

$|L_5 - L_4|/D \geq 0.4$ characterizes that the distance from the second groove 223 to the first outer surface 2123a in the first direction Y and the distance from the second groove 223 to the second outer surface 2124a in the first direction Y are greatly different. That is, the second groove 223 is disposed away from the center position of the first wall 211 in the first direction Y, so that the second groove 223 is close to the first outer surface 2123a or the second outer surface 2124a. It should be noted that the value of $|L_5-L_4|/D$ is less than 1. Exemplarily, the value of $|L_5-L_4|/D$ may be 0.4, 0.42, 0.45, 0.5, 0.55, 0.56, 0.6, 0.64, 0.65, 0.7, 0.75, 0.8, 0.85, 039, 0.91 or 0.95.

The first weak portion 224 is formed at the bottom of the first groove 221, and the pressure relief component 22 is configured to be capable of rupturing along at least part of the first weak portion 224 during pressure relief of the battery cell 20. That is, the position where the pressure relief component 22 is provided with the first groove 221 and a part corresponding to a groove bottom surface of the first groove 221 are the first weak portion 224. That is, the groove bottom wall of the first groove 221 is the first weak portion 224, so that the pressure relief component 22 can rupture along the position where the groove bottom surface of the first groove 221 is located to release the internal pressure of the battery cell 20.

The first weak portion 224 includes at least one weak segment 2241. It should be noted that the weak segment 2241 of the first weak portion 224 is a structure extending along a smooth trajectory, such as a structure extending along a straight line or an arc. The weak segment 2241 of the first weak portion 224 may be one or more. If the first weak portion 224 is of a straight line structure, an arc structure or an annular structure, the first weak portion 224 only includes one weak segment 2241. If the first weak portion 224 is of a "V"-shaped structure, a "U"-shaped structure or an "H"-shaped structure, the first weak portion 224 includes the plurality of weak segments 2241. Exemplarily, the pressure relief component 22 is provided with the first groove 221, and the first weak portion 224 is formed at the bottom of the first groove 221. The first groove 221 includes a first groove segment 2211 and two second groove segments 2212. The two second groove segments 2212 are disposed opposite to each other in the second direction Z at intervals. Two ends of the first groove segment 2211 in the second direction Z are respectively connected to the two second groove segments 2212. Then, the weak segments 2241 of the first weak portion 224 are formed at the bottom of the first groove segment 2211 and the bottom of the second groove segment 2212, so that the first weak portion 224 includes three weak segments 2241.

The cross-sectional area of the weak segment 2241 perpendicular to its extension direction is $S_1$, that is, the area of the cross section of the groove bottom wall of any groove segment of the first groove 221 in its extension direction is $S_1$. That is, $S_1$ is a product of a width of the groove bottom surface of any groove segment of the first groove 221 and a thickness of the groove bottom wall of the corresponding groove segment. In some embodiments, the position of the weak segment 2241 of the first weak portion 224 and the cross-sectional area of the cross section perpendicular to the extension direction of the weak segment 2241 may be determined by tomography, that is, $S_1$ may be obtained by tomography. It should be noted that the groove bottom surface of the first groove 221 and the groove side surface of the first groove 221 may be of a directly connected structure or an indirectly connected structure. For example, the groove bottom surface of the first groove 221 and the groove side surface of the first groove 221 may be of a structure that is connected through an arc chamfered surface. That is, an arc chamfer is formed between the groove bottom surface of the first groove 221 and the groove side surface of the first groove 221. If the groove bottom surface of the first groove 221 and the groove side surface of the first groove 221 are of the indirectly connected structure, then $S_1$ is a product of the width of the groove bottom surface of any groove segment of the first groove 221 and the thickness of a region of the pressure relief component 22 corresponding to the groove bottom surface of the first groove 221. That is to say, the groove bottom surface of the first groove 221 does not include the arc chamfered surface formed between the groove bottom surface of the first groove 221 and the groove side surface of the first groove 221.

The second weak portion 225 is formed at the bottom of the second groove 223. That is, the position where the pressure relief component 22 is provided with the second groove 223 and a part corresponding to a groove bottom surface of the second groove 223 are the second weak portion 225. That is, the groove bottom wall of the second groove 223 is the second weak portion 225.

Exemplarily, in FIG. 7 and FIG. 8, the second groove 223 is of a linear structure extending in a second direction Z. Correspondingly, the second weak portion 225 is of a linear structure extending in the second direction Z.

The cross-sectional area of the second weak portion 225 perpendicular to its extension direction is $S_2$, that is, the area of the cross section of the groove bottom wall of the second groove 223 in its extension direction is $S_2$. That is, $S_2$ is a product of a width of the groove bottom surface of the second groove 223 and a thickness of the groove bottom wall of the second groove 223. In some embodiments, the position of the second weak portion 225 and the cross-sectional area of the cross section perpendicular to the extension direction of the second weak portion 225 may be determined by tomography, that is, $S_2$ may be obtained by tomography. It should be noted that the groove bottom surface of the second groove 223 and the groove side surface of the second groove 223 may be of a directly connected structure or an indirectly connected structure. For example, the groove bottom surface of the second groove 223 and the groove side surface of the second groove 223 may be of a structure that is connected through an arc chamfered surface. That is, an arc chamfer is formed between the groove bottom surface of the second groove 223 and the groove side surface of the second groove 223. If the groove bottom surface of the second groove 223 and the groove side surface of the second groove 223 are of the indirectly connected structure, then $S_2$ is a product of the width of the groove bottom surface of the second groove 223 and the thickness of the groove bottom wall of the second groove 223. That is to say, the groove bottom surface of the second groove 223 does not include the arc chamfered surface formed between the groove bottom surface of the second groove 223 and the groove side surface of the second groove 223.

By restricting a relationship between $S_1$ and $S_2$, the risk of the second weak portion 225 rupturing before the first weak portion 224 during pressure relief of the battery cell 20 can be reduced.

When $|L_5-L_4|/D \geq 0.4$, the value of $S_2/S_1$ can be 0.71, 0.75, 0.78, 0.8, 0.83, 0.85, 0.9, 0.93, 0.95, 1, 1.05, 1.11, 1.12, 1.15, 1.17, 1.2, 1.24, 1.25, 1.3, 1.35, 1.38, 1.4, 1.44, 1.47, 1.5, or the like.

In order to make the technical problems addressed by, the technical solutions, and the beneficial effects of the embodiments of the present application clearer, the following will further describe them in detail in conjunction with the Comparative Examples 1-4 and Examples 1-10. Apparently, the described examples are only part of the embodiments of the present application, not all of the examples. The following description of at least one exemplary example is actually merely illustrative and by no means constitutes any limitation on the present application and the use thereof. All other examples obtained by those ordinarily skilled in the art based on the examples in the present application without creative efforts shall fall within the scope of protection of the present application.

Comparative Example 1

1) Preparation of positive electrode plate

A positive electrode active material $LiNi_{0.7}Co_{0.1}Mn_{0.1}O_2$, a conductive agent Super P, and a binder polyvinylidene fluoride (PVDF) are prepared in N-methyl pyrrolidone (NMP) into a positive electrode slurry, wherein a solid content in the positive electrode slurry is 50wt%, and a mass ratio of $LiNi_{0.7}Co_{0.1}Mn_{0.1}O_2$, Super P, and PVDF in the solid components is 8:1:1. The positive electrode slurry is coated on upper and lower surfaces of a current collector aluminum foil, dried at 85°C and then cold pressed, then trimmed, cut into pieces, and divided into strips, and then dried under vacuum conditions at 85°C for 4 hours to prepare the positive electrode plate.

2) Preparation of negative electrode plate

Graphite, a conductive agent Super P, a thickener carboxymethyl cellulose (CMC), and a binder styrene butadiene rubber (SBR) are mixed evenly in deionized water to prepare a negative electrode slurry, wherein a solid content in the negative electrode slurry is 30wt%, and a mass ratio of graphite, silicon monoxide, Super P, CMC and the binder styrene butadiene rubber (SBR) in the solid components is 88:7:3:2. The negative electrode slurry is coated on upper and lower surfaces of a current collector copper foil and dried at 85°C, then cold pressed, trimmed, cut into pieces, and divided into strips, and then dried under vacuum conditions at 120°C for 12 hours to prepare the negative electrode plate.

3) Preparation of electrolyte

In an argon atmosphere glove box ($H_2O<0.1ppm$, $O_2<0.1ppm$), fully dried electrolyte salt $LiPF_6$ is dissolved into a mixed solvent (the mixed solvent includes ethylene carbonate (EC) and diethyl carbonate (DEC), and ethylene carbonate (EC) and diethyl carbonate (DEC) are mixed at a mass ratio of 50:50), and uniformly mixed to obtain liquid electrolyte with a concentration of 1 mol/L.

4) Spacer

A 16 $\mu$m polyethylene (PE) film is used as a spacer.

5) Preparation of battery cell 20

The positive electrode plate, the spacer, and the negative electrode plate are stacked in order, so that the spacer is located in the middle of the positive electrode plate and the negative electrode plate to separate positive and negative electrodes. An electrode assembly 23 is obtained by winding, and the electrode assembly 23 is placed in an aluminum shell 21. The prepared electrolyte above is injected into the dried shell 21, and the battery cell 20 is prepared by packaging, standing, forming, shaping, and capacity testing. A first groove 221 and a second groove 223 are disposed on a first wall 211 of the shell 21 of the battery cell 20 (that is, a pressure relief component 22 and a first wall 211 are of an integrally formed structure, and the pressure relief component 22 is the first wall 211 of the shell 21), so as to form a first weak portion 224 at a bottom of the first groove 221, and a second weak portion 225 at a bottom of the second groove 223. The shell 21 of the battery cell 20 of Comparative Example 1 is of a cuboid structure, and the first groove 221 is of an "H"-shaped structure. That is, the first groove 221 includes a first groove segment 2211 and two second groove segments 2212 (that is, weak segments 2241 are formed at both a bottom of the first groove segment 2211 and bottoms of the two second groove segments 2212, so that the first weak portion 224 formed at the bottom of the first groove 221 includes three interconnected weak segments 2241). The two second groove segments 2212 both extend in a first direction Y, and the two second groove segments 2212 are disposed opposite to each other in a second direction Z. The first groove segment 2211 extends in the second direction Z, and two ends of the first groove segment 2211 in the second direction Z are respectively connected to the two second groove segments 2212. The first groove segment 2211 is located at a center of the first wall 211 in the first direction Y, the shell 21 of the battery cell 20 has a thickness of 39 mm in the first direction Y, a length of 203 mm in the second direction Z, and a height of 122.7 mm in the thickness direction X of the first wall, and a capacity of the battery cell 20 is 185 Ah.

The preparation methods of the battery cell 20 of Comparative Examples 2-4 and Examples 1-10 are the same as those of Comparative Example 1, except that the difference between the minimum distance $L_4$ between the second groove 223 and the first outer surface 2123a in the first direction Y and the minimum distance $L_5$ between the second groove 223 and the second outer surface 2124a in the first direction Y is different, and the area $S_1$ of the cross section of the weak segment 2241 of the first weak portion 224 perpendicular to its extension direction and the area $S_2$ of the cross section of the second weak portion 225 perpendicular to its extension direction are different. Thus, in a case where $|L_5-L_4|/D$ of the battery cell 20 is ≥0.4, a detonation condition of the pressure relief component 22 during pressure relief is tested when the ratio of the area $S_2$ of the cross section of the second weak portion 225 perpendicular to its extension direction to the area $S_1$ of the cross section of the weak segment 2241 of the first weak portion 224 perpendicular to its extension direction is different, and the specific conditions are shown in Tables 1 and 2. Specifically, Table 1 shows a case where $|L_5-L_4|/D=0.4$, and Table 2 shows a case where $|L_5-L_4|/D=0.56$.

The battery cell 20 needs to be pre-processed before testing:

(1) a hole is drilled at a solution injection hole of the battery cell 20;
(2) a hose is inserted into the battery cell 20 by 10 mm from the solution injection hole;
(3) AB glue is squeezed onto a cardboard and stirred evenly; and
(4) the evenly mixed AB glue is applied around an interface between the hose and the battery cell 20 (Note: there should be no air bubbles or dirt on a bonding surface) and subjected to standing for 30 minutes.

During a blasting experiment, a steel clamp is used to clamp two sides of the shell 21 of the battery cell 20 in the first direction Y, that is, the first outer surface 2123a and the second outer surface 2124a of the shell 21 of the battery cell 20 are clamped with the steel clamp with a pre-tightening force of 3000 N to simulate a restrained state of the battery cell 20 in the actual battery 100. At the same time, during the experiment, the situation of the pressure relief component 22 is videotaped throughout the process to observe its detonation position and the predetermined flipping action of the pressure relief component. Before the experiment, a detonation pressure test system and the battery cell 20 are connected through a hose. During the experiment, the detonation pressure test system inflates and blasts the battery cell 20 at 0.3 MPa/s, and detects an intake pressure of the battery cell 20 in real time. When the intake pressure drops by more than 0.02 MPa, the inflation is stopped. Generally, the intake pressure curve generally shows an increasing trend. When the intake pressure reaches the detonation pressure of the battery cell 20, it will suddenly drop to 0. At this time, a maximum value of the curve is the detonation pressure of the battery cell 20.

The test results of Comparative Examples 1-4 and Examples 1-10 are shown in Table 1 and Table 2 below:

Table 1

| Serial number | $|L_5-L_4|$ | D | $|L_5-L_4|/D$ | $S_1$ | $S_2$ | $S_2/S_1$ | Detonation position | Detonation pressure |
|---|---|---|---|---|---|---|---|---|
| Comparative Example 1 | 15.6 mm | 39 mm | 0.4 | 0.13 mm$^2$ | 0.09 mm$^2$ | 0.69 | Second weak portion 225 | / |
| Example 1 | 15.6 mm | 39 mm | 0.4 | 0.14 mm$^2$ | 0.1 mm$^2$ | 0.71 | First weak portion 224 | 0.73 MPa |
| Example 2 | 15.6 mm | 39 mm | 0.4 | 0.18 mm$^2$ | 0.15 mm$^2$ | 0.83 | First weak portion 224 | 0.83 MPa |
| Example 3 | 15.6 mm | 39 mm | 0.4 | 0.2 mm$^2$ | 0.2 mm$^2$ | 1.00 | First weak portion 224 | 0.88 MPa |
| Example 4 | 15.6 mm | 39 mm | 0.4 | 0.16 mm$^2$ | 0.22 mm$^2$ | 1.38 | First weak portion 224 | 0.99 MPa |
| Example 5 | 15.6 mm | 39 mm | 0.4 | 0.12 mm$^2$ | 0.18 mm$^2$ | 1.5 | First weak portion 224 | 1.08 MPa |

(continued)

| Serial number | $\|L_5\text{-}L_4\|$ | D | $\|L_5\text{-}L_4\|/D$ | $S_1$ | $S_2$ | $S_2/S_1$ | Detonation position | Detonation pressure |
|---|---|---|---|---|---|---|---|---|
| Comparative Example 2 | 15.6 mm | 39 mm | 0.4 | 0.11 mm$^2$ | 0.17 mm$^2$ | 1.55 | First weak portion 224 | 1.11 MPa |

Table 2

| Serial number | $\|L_5\text{-}L_4\|$ | D | $\|L_5\text{-}L_4\|/D$ | $S_1$ | $S_2$ | $S_2/S_1$ | Detonation position | Detonation pressure |
|---|---|---|---|---|---|---|---|---|
| Comparative Example 3 | 21.84 mm | 39 mm | 0.56 | 0.13 mm$^2$ | 0.09 mm$^2$ | 0.69 | Second weak portion 225 | / |
| Example 6 | 21.84 mm | 39 mm | 0.56 | 0.14 mm$^2$ | 0.1 mm$^2$ | 0.71 | First weak portion 224 | 0.72 MPa |
| Example 7 | 21.84 mm | 39 mm | 0.56 | 0.18 mm$^2$ | 0.15 mm$^2$ | 0.83 | First weak portion 224 | 0.84 MPa |
| Example 8 | 21.84 mm | 39 mm | 0.56 | 0.2 mm$^2$ | 0.2 mm$^2$ | 1.00 | First weak portion 224 | 0.89 MPa |
| Example 9 | 21.84 mm | 39 mm | 0.56 | 0.16 mm$^2$ | 0.22 mm$^2$ | 1.38 | First weak portion 224 | 1.03 MPa |
| Example 10 | 21.84 mm | 39 mm | 0.56 | 0.12 mm$^2$ | 0.18 mm$^2$ | 1.5 | First weak portion 224 | 1.09 MPa |
| Comparative Example 4 | 21.84 mm | 39 mm | 0.56 | 0.11 mm$^2$ | 0.17 mm$^2$ | 1.55 | First weak portion 224 | 1.12 MPa |

Please refer to Table 1 and Table 2. In combination with Comparative Examples 1 and 3, it can be known that $\|L_5\text{-}L_4\|/D \geq 0.4$, but $S_2/S_1 \leq 0.7$. At this time, the cross-sectional area of the second weak portion 225 formed at the bottom of the second groove 223 perpendicular to its extension direction is small. During pressure relief of the battery cell 20, the second weak portion 225 formed at the bottom of the second groove 223 will rupture prior to the first weak portion 224 formed at the bottom of the first groove 221.

In combination with Comparative Examples 3 and 4, it can be known that $\|L_5\text{-}L_4\|/D \geq 0.4$, but $S_2/S_1 > 1.5$. At this time, the cross-sectional area of the second weak portion 225 formed at the bottom of the second groove 223 perpendicular to its extension direction is large, so that the second weak portion 225 formed at the bottom of the second groove 223 has relatively large rigidity, and the obstacle to flipping and opening of the predetermined pressure relief region 222 is relatively large. Thus, it is difficult for the predetermined pressure relief region 222 to flip around the second weak portion 225 after the first weak portion 224 ruptures, which can easily cause a large detonation pressure, so that the battery cell 20 has a phenomenon of untimely pressure relief, thereby easily leading to the risk of bursting or explosion of the shell 21 of the battery cell 20. In the project, it is expected that the detonation position of the pressure relief component 22 is located at the first weak portion 224, and the second weak portion 225 only serves to guide the predetermined pressure relief region 222 to flip over. When the battery cell 20 is used in the project, there is a requirement for upper and lower limits of the detonation pressure ($0.9 \pm 0.2$ MPa), so that when $\|L_5\text{-}L_4\|/D \geq 0.4$, if $S_2/S_1 > 1.5$, the detonation pressure will be higher than the upper limit of the detonation pressure desired by the project.

In combination with Examples 1-5 and Examples 6-10, it can be known that $\|L_5\text{-}L_4\|/D \geq 0.4$ and $0.7 < S_2/S_1 \leq 1.5$, not only can the detonation position of the pressure relief component 22 be located at the first weak portion 224, but the detonation pressure also meets engineering expectations. Therefore, when $\|L_5\text{-}L_4\|/D \geq 0.4$, the ratio of the cross-sectional area $S_2$ of the second weak portion 225 perpendicular to its extension direction to the cross-sectional area $S_1$ of the weak segment 2241 of the first weak portion 224 perpendicular to its extension direction is set to be greater than 0.7 and less than or equal to 1.5.

In the present embodiment, when the difference between the minimum distance $L_4$ from the second groove 223 to the first outer surface 2123a and the minimum distance $L_5$ from the second groove 223 to the second outer surface 2124a is greater than or equal to 0.4 times the distance D between the first outer surface 2123a and the second outer surface 2124a, the second groove 223 deviates from the center position of the first wall 211 in the first direction Y by a large distance, so that the second groove 223 is closer to the first outer surface 2123a or the second outer surface 2124a. Thus, rigidity of a position where the pressure relief component 22 is provided with the second groove 223 is greatly different from rigidity of a position where the pressure relief component 22 is provided with the first groove 221, and the rigidity has a greater influence on the first weak portion 224 and the second weak portion 225 of the pressure relief component 22 during rupturing. If the influence of the rigidity on the first weak portion 224 and the second weak portion 225 of the pressure relief component 22 is not considered, the cross-sectional area of the second weak portion 225 perpendicular to its extension direction only needs to be greater than the cross-sectional area of the weak segment 2241 perpendicular to its extension direction. That is, the cross-sectional area $S_2$ of the second weak portion 225 perpendicular to its extension direction is greater than the cross-sectional area $S_1$ of the weak segment 2241 perpendicular to its extension direction, so that the first weak portion 224 ruptures and releases pressure prior to the second weak portion 225, and the second weak portion 225 plays a role in guiding the predetermined pressure relief region 222 defined by the first groove 221. However, considering that the rigidity has a greater influence on the rupturting of the first weak portion 224 and the second weak portion 225 (when $S_1$ and $S_2$ are the same, the second weak portion 225 is more difficult to rupture than the first weak portion 224, therefore, the cross-sectional area of the second weak portion 225 may be set to be smaller), when a ratio of the cross-sectional area of the second weak portion 225 perpendicular to its extension direction to the cross-sectional area of the weak segment 2241 perpendicular to its extension direction is greater than 0.7 and less than or equal to 1, the first weak portion 224 can be opened for pressure relief prior to the second weak portion 225, and the second weak portion 225 plays a role in guiding the predetermined pressure relief region 222 defined by the first groove 221. Similarly, since the rigidity has a greater influence on the rupturing of the first weak portion 224 and the second weak portion 225, when the ratio of the cross-sectional area of the second weak portion 225 perpendicular to its extension direction to the cross-sectional area of the weak segment 2241 perpendicular to its extension direction is less than or equal to 1.5, the phenomenon of excessive difference in rigidity between the second weak portion 225 and the first weak portion 224 can be alleviated, so that the rigidity of the second weak portion 225 is close to that of the first weak portion 224. Thus, the obstacle to the flipping and opening of the predetermined pressure relief region 222 can be reduced, so that the predetermined pressure relief region 222 can be more easily flipped and opened during pressure relief, which is conducive to alleviating a risk of the explosion or bursting of the shell 21 of the battery cell 20 caused by the untimely pressure relief of the pressure relief component 22.

In some embodiments, referring to FIG. 6, in the first direction Y, the distance between the first outer surface 2123a and the second outer surface 2124a is D, which meets that 15 mm≤D≤90 mm.

The distance between the first outer surface 2123a and the second outer surface 2124a is D, that is, the thickness of the shell 21 of the battery cell 20 in the first direction Y is D.

Exemplarily, the distance D between the first outer surface 2123a and the second outer surface 2124a may be 15 mm, 16 mm, 18 mm, 20 mm, 22 mm, 25 mm, 28 mm, 30 mm, 35 mm, 39 mm, 40 mm, 44 mm, 45 mm, 50 mm, 55 mm, 60 mm, 65 mm, 70 mm, 75 mm, 80 mm, 90 mm, or the like.

In the present embodiment, by setting the distance between the first outer surface 2123a and the second outer surface 2124a in the first direction Y to be in a range from 15 mm to 90 mm, a size of the shell 21 in the first direction Y is in a range from 15 mm to 90 mm. On the one hand, the size of the shell 21 in the first direction Y is set to be greater than or equal to 15 mm, so that the pressure relief component 22 disposed on the first wall 211 has sufficient space in the first direction Y to be provided with the first groove 221 and the second groove 223, which is conducive to reducing the difficulty of disposing the pressure relief component 22 on the first wall 211 and disposing the first groove 221 and the second groove 223 on the pressure relief component 22. On the other hand, the size of the shell 21 in the first direction Y is set to be less than or equal to 90 mm to alleviate a phenomenon of greater manufacturing difficulty due to the excessive size of the battery cell 20 in the first direction Y.

In some embodiments, referring to FIG. 6 and FIG. 7, in the thickness direction X of the first wall, two ends of the projection of the second groove 223 in its extension direction extend beyond the two end portions of the first groove 221 respectively.

The two ends of the projection of the second groove 223 in its extension direction extend beyond the two end portions of the first groove 221 respectively. That is, the size of the second groove 223 in its extension direction is larger than that of the first groove 221, and the two ends of the second groove 223 in its extension direction extend beyond the two sides of the first groove 221 respectively. That is, in the embodiment where the first groove 221 includes the first groove segment 2211 and the two second groove segments 2212, the two ends of the second groove 223 in its extension direction extend beyond the two sides of the two second groove segments 2212 respectively.

Exemplarily, referring to FIG. 7, the second groove 223 is of a structure extending in the second direction Z. Correspondingly, the two ends of the second groove 223 in the second direction Z extend two sides of the first groove 221 in the second direction Z respectively.

In the present embodiment, in the thickness direction X of the first wall, by setting the projection of the second groove 223 in its extension direction to extend beyond the two end portions of the projection of the first groove 221 respectively, the second groove 223 is of a structure in which the two ends in its extension direction respectively exceed the two end portions of the first groove 221. On the one hand, the size of the second groove 223 in the second direction Z is greater than that of the first groove 221, so that the predetermined pressure relief region 222 defined by the first groove 221 can be flipped around the second groove 223, and the flipping effect of the predetermined pressure relief region 222 can be improved, thereby increasing the pressure relief area of the battery cell 20 to increase the pressure relief rate of the battery cell 20 when thermal runaway occurs. On the other hand, an absorption effect of the second groove 223 on an excess material extruded out of the first groove 221 of the pressure relief component 22 during a molding process can be improved, and a separation effect of the second groove 223 between an edge of the first groove 221 and an edge of the first wall 211 can be improved, so as to improve a blocking effect of the second groove 223 on deformation energy of the battery cell 20 when the battery cell 20 is subjected to internal and external impact forces.

In some embodiments, referring to FIG. 6, the length of the second groove 223 is $L_6$, which meets that 8 mm$\leq L_6\leq$60 mm.

Exemplarily, in FIG. 6, the second groove 223 is of a structure extending in the second direction Z. Correspondingly, the length $L_6$ of the second groove 223 is a maximum size of the second groove 223 in the second direction Z.

Exemplarily, the length $L_6$ of the second groove 223 may be 8 mm, 9 mm, 10 mm, 12 mm, 15 mm, 18 mm, 20 mm, 22 mm, 23 mm, 25 mm, 28 mm, 30 mm, 35 mm, 40 mm, 45 mm, 50 mm, 55 mm, 60 mm, or the like.

In the present embodiment, by setting the length of the second groove 223 to be in a range from 8 mm to 60 mm, on the one hand, setting the length of the second groove 223 to be greater than or equal to 8 mm can effectively reduce the processing difficulty of the second groove 223, and can alleviate a phenomenon that the size of the first groove 221 is smaller due to the limitation of the second groove 223, which is beneficial to increase the area of the region where the pressure relief component 22 is provided with the first groove 221. On the other hand, setting the length of the second groove 223 to be less than or equal to 60 mm can alleviate a phenomenon of waste caused by excessive processing of the second groove 223, and can reduce a space occupied by the second groove 223 on the pressure relief component 22, which is beneficial to improve an overall structural strength of the pressure relief component 22.

According to some embodiments of the present application, referring to FIG. 8 and FIG. 9, in the thickness direction X of the first wall, the first groove 221 and the second groove 223 are disposed on two sides of the pressure relief component 22 respectively.

The first groove 221 and the second groove 223 are disposed on the two sides of the pressure relief component 22 respectively. That is, the first groove 221 and the second groove 223 are respectively disposed on surfaces of the two sides of the pressure relief component 22 in the thickness direction X of the first wall.

Optionally, the first groove 221 may be disposed on one side of the pressure relief component 22 facing the interior of the shell 21, and correspondingly, the second groove 223 is disposed on one side of the pressure relief component 22 facing away from the interior of the shell 21. Of course, the first groove 221 may also be disposed on one side of the pressure relief component 22 facing away from the interior of the shell 21, and correspondingly, the second groove 223 is disposed on one side of the pressure relief component 22 facing the interior of the shell 21. in other embodiments, the first groove 221 and the second groove 223 may be located on the same side of the pressure relief component 22 in the thickness direction X of the first wall.

Exemplarily, in FIG. 9, the groove side surface of the second groove 223 and the groove bottom surface of the second groove 223 are disposed at an obtuse angle to facilitate machining and forming the second groove 223. Similarly, the groove side surface of the second groove 221 and the groove bottom surface of the second groove 221 are disposed at an obtuse angle to facilitate machining and forming the first groove 221. In FIG. 9, the first groove 221 is of a multi-stage groove structure disposed in the thickness direction X of the first wall. That is, the first groove 221 is of a stepped groove structure, and the groove side surface and the groove bottom surface of each stage of the groove are disposed at an obtuse angle.

In the present embodiment, by respectively disposing the first groove 221 and the second groove 223 on the two sides of the pressure relief component 22 in the thickness direction X of the first wall, it is convenient to process the first groove 221 and the second groove 223 respectively on the two sides of the pressure relief component 22, which is beneficial to reduce the mutual influence of the first groove 221 and the second groove 223 during the processing.

In some embodiments, continue referring to FIG. 8 and FIG. 9, in the thickness direction X of the first wall, the first groove 221 is disposed on one side of the pressure relief component 22 facing away from the interior of the shell 21.

It should be noted that in the embodiment where the pressure relief component 22 and the first wall 211 are integrally formed, correspondingly, the pressure relief component 22 is the first wall 211, that is, the first groove 221 is disposed on the third outer surface 2111 of the first wall 211.

In the present embodiment, by disposing the first groove 221 on one side of the pressure relief component facing 22 away from the interior of the shell 21, it is convenient to process and form the first groove 221 on the pressure relief component 22, which is beneficial to reduce the processing difficulty of the first groove 221 and improve production efficiency of the battery cell 20.

In some embodiments, continue referring to FIG. 8 and FIG. 9, in the thickness direction X of the first wall, the second groove 223 is disposed on one side of the pressure relief component 22 facing the interior of the shell 21.

In the present embodiment, by disposing the second groove 223 on one side of the pressure relief component 22 facing the interior of the shell 21, it is convenient for the predetermined pressure relief region 222 to be flipped towards an outer side of the shell 21 around the groove bottom wall of the second groove 223 when it is opened, thereby reducing the interference effect of the groove side surface of the second groove 223 on the predetermined pressure relief region 222 during the flipping process, which is beneficial to improve the flipping effect of the predetermined pressure relief region 222.

According to some embodiments of the present application, referring to FIG. 5, FIG. 6 and FIG. 7, the first groove 221 may include a first groove segment 2211 and two second groove segments 2212, the two second groove segments 2212 are disposed opposite to each other in the second direction Z, and the second groove segments 2212 and the second groove 223 are arranged in the first direction Y; and the first groove segment 2211 is connected to the two second groove segments 2212, the first groove segment 2211 and the two second groove segments 2212 jointly define predetermined pressure relief region 222, and the second direction Z is perpendicular to the thickness direction X of the first wall and the first direction Y.

The two second groove segments 2212 are disposed opposite to each other in the second direction Z, that is, the two second groove segments 2212 are arranged in the second direction Z at intervals. Exemplarily, in FIG. 6 and FIG. 7, both the two second groove segments 2212 extend in the first direction Y.

It should be noted that in the embodiment where the first groove 221 includes the first groove segment 2211 and the two second groove segments 2212, referring to FIG. 7, the minimum distance $L_1$ between the second groove 223 and the first groove 221 in the first direction Y is the minimum distance between the second groove 223 and the second groove segments 2212 in the first direction Y.

The first groove segment 2211 is connected to the two second groove segments 2212. That is, the first groove segment 2211 is located between the two second groove segments 2212 in the second direction Z, and the two ends of the first groove segment 2211 are respectively connected to the two second groove segments 2212. Of course, in other embodiments, the first groove segment 2211 may also extend beyond the two second groove segments 2212 at two ends in the second direction Z.

The first groove segment 2211 and the two second groove segments 2212 jointly define the predetermined pressure relief region 222. That is, the first groove segment 2211 and the two second groove segments 2212 can enclose to form at least one predetermined pressure relief region 222 on the pressure relief component 22, and the first groove segment 2211 and the two second groove segments 2212 are of structures disposed along the edge of the predetermined pressure relief region 222, so that the predetermined pressure relief region 222 can be opened with the first groove segment 2211 and the two second groove segments 2212 as boundaries. That is, the predetermined pressure relief region 222 is formed in the region enclosed by the first groove segment 2211 and the two second groove segments 2212, so that the part of the pressure relief component 22 located in the predetermined pressure relief region 222 can be opened with the first groove segment 2211 and the two second groove segments 2212 as boundaries during pressure relief of the battery cell 20, thereby releasing the internal pressure of the battery cell 20.

Optionally, referring to FIG. 6 and FIG. 7, a shape of the first groove 221 jointly formed by the first groove segment 2211 and the two second groove segments 2212 may be of an "H"-shaped structure to form the two predetermined pressure relief regions 222 on the pressure relief component 22, and the two predetermined pressure relief regions 222 are respectively located on the two sides of the first groove segment 2211 in the first direction Y. Of course, in other embodiments, the first groove 221 may also be other shapes. For example, one ends of the two second groove segments 2212 are respectively connected to the two ends of the first groove segment 2211, so that the first groove segment 2211 and the two second groove segments 2212 enclose to form one predetermined pressure relief region 222, and thus the shape of the first groove 221 jointly formed by the first groove segment 2211 and the two second groove segments 2212 is of a "U"-shaped structure.

In the present embodiment, the first groove 221 includes the two second groove segments 2212 disposed opposite to each other in the second direction Z and the first groove segment 2211 connected to the two second groove segments 2212, so that the pressure relief component 22 can rupture along the first groove segment 2211 and the two second groove segments 2212 during pressure relief of the battery cell 20, so as to open the predetermined pressure relief region 222 to release the internal pressure of the battery cell 20. By using the first groove 221 with such a structure, on the one hand, it is convenient to process the first groove 221 on the pressure relief component 22 and form the predetermined pressure relief region 222, and the predetermined pressure relief region 222 defined by the first groove 221 of such a structure is more prone to flipping around the second groove 223. On the other hand, an intersection position of the first groove segment 2211 and the second groove segments 2212 is weaker, which makes the pressure relief component be more prone to rupturing and open the predetermined pressure relief region 222 for pressure relief.

According to some embodiments of the present application, please refer to FIG. 6 and FIG. 7, connection positions of the two second groove segments 2212 and the first groove segment 2211 both deviate from two ends of the two second groove segments 2212, so as to form the predetermined pressure relief regions 222 on the two sides of the first groove segment 2211 in first direction Y. The pressure relief component 22 is provided with the two second grooves 223, and in first direction Y, the two second grooves 223 are located on two sides of the first groove 221 respectively.

The connection positions of the two second groove segments 2212 and the first groove segment 2211 both deviate from the two ends of the two second groove segments 2212. That is, the first groove segment 2211 is connected between the two ends of the second groove segments 2212, so that the shape of the first groove 221 jointly formed by the first groove segment 2211 and the two second groove segments 2212 is of an approximately "H"-shaped structure, thus the first groove 221 defines the two predetermined pressure relief regions 222, and the two predetermined pressure relief regions 222 are respectively located on the two sides of the first groove segment 2211 in the first direction Y.

In the first direction Y, the two second grooves 223 are respectively located on the two sides of the first groove 221. That is, the first groove 221 is provided with the second grooves 223 on the two sides in the first direction Y, and each second groove 223 is disposed corresponding to one predetermined pressure relief region 222, so that each second groove 223 can guide the corresponding predetermined pressure relief region 222 to flip.

In the present embodiment, by setting the connection positions of the two second groove segments 2212 and the first groove segment 2211 to be located between the two ends of the corresponding second groove segments 2212, so that the first groove segment 2211 and the two second groove segments 2212 form the first groove 221 similar to an "H"-shaped structure. Thus, the predetermined pressure relief regions 222 can be formed on the two sides of the first groove segment 2211 of the first groove 221, and the two predetermined pressure relief regions 222 can be opened in an opposite manner for pressure relief during pressure relief of the battery cell 20, which is beneficial to further increase the pressure relief effect of the battery cell 20 and can effectively increase the pressure relief rate of the battery cell 20.

In some embodiments, please continue to refer to FIG. 6 and FIG. 7, the first groove segment 2211 and the two second groove segments 2212 both extend along a linear trajectory, and the first groove segment 2211 is perpendicular to the two second groove segments 2212. That is, the extension direction of the first groove segment 2211 is perpendicular to the extension direction of the second groove segments 2212, so that the shape of the first groove 221 jointly formed by the first groove segment 2211 and the two second groove segments 2212 is of a regular "H"-shaped structure, and the predetermined pressure relief regions 222 are formed on the two sides of the first groove segment 2211 in the first direction Y. Of course, the areas of the two predetermined pressure relief regions 222 may be the same or different.

Exemplarily, the first groove segment 2211 is of a linear structure extending in the second direction Z, the second straight structures 2212 are of a linear structure extending in the first direction Y, and the first straight structure 2211 is located between the two second straight structures 2212 in the second direction Z.

In the present embodiment, by setting the two second groove segments 2212 to be perpendicular to the first groove segment 2211, so that an extension direction of the first groove segment 2211 is an arrangement direction of the two second groove segments 2212. On the one hand, regularity of the shape of the first groove 221 can be improved, which is beneficial to reduce the processing difficulty of the first groove 221, so as to reduce a manufacturing cost of the battery cell 20. On the other hand, it is convenient for the two predetermined pressure relief regions 222, on the pressure relief component 22, located on the two sides of the first groove segment 2211 to perform pressure relief in an opposite direction during pressure relief of the battery cell 20, which is beneficial to improve the pressure relief efficiency of the battery cell 20.

According to some embodiments of the present application, referring to FIG. 7, the second groove segments 2212 extend in the first direction Y, and the length of the second groove segments 2212 in the first direction Y is $L_7$, which meets that 6 mm $\leq L_7 \leq$ 50 mm.

The length $L_7$ of the second groove segments 2212 in the first direction Y is the maximum size of the second groove segments 2212 in the first direction Y.

Exemplarily, the length $L_7$ of the second groove segments 2212 in the first direction Y may be 6 mm, 7 mm, 8 mm, 9 mm, 10 mm, 11 mm, 12 mm, 15 mm, 18 mm, 20 mm, 22 mm, 25 mm, 28 mm, 30 mm, 35 mm, 40 mm, 45 mm, 50 mm, 55 mm, 60 mm, or the like.

In the present embodiment, by setting the second groove segments 2212 as a structure extending in the first direction Y, and setting the length of the second groove segments 2212 in the first direction Y to be in a range from 6 mm to 50 mm, on the one hand, the length of the second groove segments 2212 is set to be greater than or equal to 6 mm, so as to increase an area of the predetermined pressure relief region 222 defined by the first groove segment 2211 and the two second groove segments 2212, thereby facilitating the increase of the pressure relief area of the battery cell 20. On the other hand, the length of the second groove segments 2212 is set to be less than or equal to 50 mm, so as to save a space occupied by the second groove segments 2212 on the pressure relief component 22 in the first direction Y, so that the first groove 221 has enough space on one side of the first direction Y to be provided with the second groove 223, so as to reduce the manufacturing difficulty of the second groove 223.

According to some embodiments of the present application, referring to FIG. 10, FIG. 10 is a bottom view of a shell body 212 of the shell 21 of the battery cell 20 provided by further embodiments of the present application. The first groove 221 includes a first groove segment 2211 and a second groove segment 2212, the first groove segment 2211 is connected to the second groove segment 2212, and the first groove segment 2211 and the second groove segment 2212 jointly define the predetermined pressure relief region 222.

In the embodiment where the first weak portion 224 is formed at the bottom of the first groove 221 and the first weak portion 224 includes at least one weak segment 2241, correspondingly, weak segments 2241 are formed at the bottom of the first groove segment 2211 and the bottom of the second groove segment 2212, so that the first weak portion 224 formed at the bottom of the first groove 221 includes the two interconnected weak segments 2241.

The first groove segment 2211 and the second groove segment 2212 jointly define the predetermined pressure relief region 222. That is, the first groove segment 2211 and the second groove segment 2212 are of structures disposed along the edge of the predetermined pressure relief region 222, so that a setting trajectory of the first groove 221 is disposed along the edge of the predetermined pressure relief region 222.

Exemplarily, in FIG. 10, one end of the first groove segment 2211 is connected to one end of the second groove segment 2212, so that the first groove segment 2211 and the second groove segment 2212 form the first groove 221 of a "V"-shaped structure. Correspondingly, the first groove 221 only defines one predetermined pressure relief region 222, the pressure relief component 22 is only provided with one second groove 223, and the second groove 223 is disposed corresponding to the predetermined pressure relief region 222. Of course, in other embodiments, the shape of the first groove 221 formed by interconnection of the first groove segment 2211 and the second groove segment 2212 may also be of a "T"-shaped structure, an "L"-shaped structure, an "X"-shaped structure, etc.

In the present embodiment, by setting the first groove 221 to have the first groove segment 2211 and the second groove segment 2212 which are connected, and making the first groove segment 2211 and the second groove segment 2212 jointly define the predetermined pressure relief region 222, on the one hand, the pressure relief area of the battery cell 20 can be increased to increase the pressure relief rate of the battery cell 20. On the other hand, an intersection position of the first groove segment 2211 and the second groove segment 2212 is made weaker, and more prone to rupturing and opening the predetermined pressure relief region 222 to release the internal pressure of the battery cell 20.

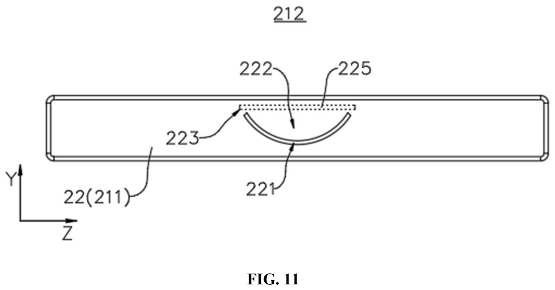

According to some embodiments of the present application, referring to FIG. 11, FIG. 11 is a bottom view of a shell body 212 of the shell 21 of the battery cell 20 provided by still further embodiments of the present application. The first groove 221 is a groove extending along an arc-shaped trajectory, and the predetermined pressure relief region 222 is located on an inner side of the first groove 221. That is, the first groove 221 includes only one smooth groove segment, and the first groove 221 is of an arc-shaped groove structure.

Exemplarily, in FIG. 11, the shape of the first groove 221 is of a "C"-shaped structure to form the predetermined pressure relief region 222 on an inner side of the arc of the first groove 221, the pressure relief component 22 is only provided with one second groove 223, and the second groove 223 is disposed corresponding to the predetermined pressure relief region 222.

In the present embodiment, by setting the first groove 221 to be a structure extending along the arc-shaped trajectory, the predetermined pressure relief region 222 is formed on the inner side of the first groove 221. The first groove 221 of such a structure is easy to manufacture and form on the pressure relief component 22, which is beneficial to reduce the manufacturing difficulty of the battery cell 20.

According to some embodiments of the present application, referring to FIG. 8 and FIG. 9, the first groove 221 may include multi-stage grooves arranged sequentially in the thickness direction X of first wall. That is, the first groove 221 is of a multi-stage stepped groove structure arranged in the thickness direction X of the first wall, that is, the first groove 221 is of a stepped groove structure formed by multiple stamping.

Exemplarily, in FIG. 9, the first groove 221 is of a two-stage stepped groove structure. That is, the first groove 221 includes two-stage grooves arranged in sequence in the thickness direction X of the first wall. Of course, in other embodiments, the first groove 221 may also be a three-stage stepped groove, a four-stage stepped groove, a five-stage stepped groove or a six-stage stepped groove, etc.

It should be noted that in the embodiment where the first groove 221 includes a plurality of groove segments, each groove segment is of a multi-stage stepped groove structure. Exemplarily, in FIG. 7, the first groove 221 includes the first groove segment 2211 and the two second groove segments 2212, and the first groove segment 2211 and the two second groove segments 2212 are both of multi-stage stepped groove structures. Of course, when the first groove 221 as a whole is of a structure such as a curve, a loop or a straight line extending along a smooth trajectory, the first groove 221 as a whole is of a multi-stage stepped groove structure.

In the present embodiment, by setting the first groove 221 as a multi-stage stepped groove structure disposed in the thickness direction X of the first wall, the first groove 221 is a groove structure formed by multiple processing. In a case of the same depth, on the one hand, by using the first groove 221 of such a structure, a depth of single processing of the first groove 221 can be reduced, which is beneficial to reduce the manufacturing difficulty of the first groove 221 and the demand for a manufacturing device, so as to reduce the manufacturing cost, and forming force exerted on the pressure relief component 22 during the single processing of the first groove 221 can be reduced, which is beneficial to reduce the risk of cracks in the pressure relief component 22, so as to improve the production quality of the battery cell 20. On the other hand, a material flow shape of the first groove 221 during the formation process can be improved, which is beneficial to the flow of a material generated when the first groove 221 is formed, so as to improve the structural consistency of the first groove 221.

According to some embodiments of the present application, referring to FIG. 5, FIG. 6 and FIG. 8, the pressure relief component 22 and the first wall 211 are integrally formed. That is, the pressure relief component 22 and the first wall 211 are of an integrated structure. That is, the pressure relief component 22 is the first wall 211, so that the pressure relief component 22 is a part of the shell 21, and the first groove 221 and the second groove 223 of the pressure relief component 22 are directly disposed on the first wall 211.

Exemplarily, in FIG. 5, the first wall 211 is a bottom wall of the shell 212 disposed opposite to an end cover 213 in the thickness direction X of the first wall, then the pressure relief component 22 is the bottom wall of the shell 212, and the first groove 221 and the second groove 223 are directly disposed on the bottom wall of the shell 212. If the first wall 211 is the end cover 213, the pressure relief component 22 is the end cover 213, so that the pressure relief component 22 can close an opening 2122 of the shell 212, and two electrode terminals 24 are both installed on the pressure relief component 22.

According to some embodiments of the present application, a material of the first wall 211 includes a steel material.

Exemplarily, the material of the first wall 211 may be carbon steel, alloy steel, stainless steel or the like.

It should be noted that the material of the first wall 211 includes the steel material. If the first wall 211 is the end cover 213 of the shell 21, the material of the end cover 213 is the steel material. If the first wall 211 is a wall in the shell 212, the material of the shell 212 is the steel material.

In the present embodiment, by setting the material of the first wall 211 to be the steel material, the first wall 211 made of the steel material has better strength due to the high strength of steel, so that when the bursting pressure of the battery cell 20 is constant, the first wall 211 can be made thinner, which is beneficial to save the space occupied by the first wall 211.

In some embodiments, the steel material is carbon steel or stainless steel.

Exemplarily, the carbon steel may be low carbon steel, medium carbon steel or high carbon steel.

In the present embodiment, the carbon steel or the stainless steel is used as the material of the first wall 211, which has low cost and is easy to manufacture.

According to some embodiments of the present application, the material of the first wall 211 includes an aluminum alloy.

It should be noted that the material of the first wall 211 includes the aluminum alloy. If the first wall 211 is the end cover 213 of the shell 21, the material of the end cover 213 is the aluminum alloy. If the first wall 211 is a wall in the shell 212, the material of the shell 212 is the aluminum alloy.

In the present embodiment, by setting the material of the first wall 211 to be the aluminum alloy, due to the characteristics of aluminum alloy being light weight and good ductility, it is easier to process the first groove 221 and the second groove 223 on the first wall 211, which helps to reduce the manufacturing difficulty of the first groove 221 and the second groove 223.

In some embodiments, the aluminum alloy includes components at percentage mass contents of: aluminum$\geq$99.6%, copper$\leq$0.05%, iron$\leq$0.35%, magnesium$\leq$0.03%, manganese$\leq$0.03%, silicon$\leq$0.25%, titanium$\leq$0.03%, vanadium$\leq$0.05%, zinc$\leq$0.05%, and other individual elements$\leq$0.03%.

In the present embodiment, the aluminum alloy belongs to 3xxx series aluminum. Such aluminum alloy has lower hardness and better forming ability, which can further reduce the processing difficulty of the first groove 221 and the second groove 223 and improve the machining accuracy of the first groove 221 and the second groove 223, thereby helping to improve the pressure relief consistency of the battery cell 20.

In some embodiments, the aluminum alloy includes components at percentage mass contents of: aluminum$\geq$96.7%, 0.05%$\leq$copper$\leq$0.2%, iron$\leq$0.7%, manganese$\leq$1.5%, silicon$\leq$0.6%, zinc$\leq$0.1%, components of other individual elements$\leq$0.05%, and total components of other elements$\leq$0.15%.

In the present embodiment, the aluminum alloy belongs to 5xxx series aluminum. The first wall 211 made of the aluminum alloy has higher hardness and greater strength, so that the first wall 211 has good anti-destruction ability.

In the present embodiment, by setting the pressure relief component 22 and the first wall 211 as an integrally formed structure, the pressure relief component 22 is a structure integrated on the first wall 211, that is, the pressure relief component 22 is a wall of the shell 21. Correspondingly, the first wall 211 is provided with the first groove 221 and the second groove 223. The battery cell 20 adopting such a structure can improve the structural strength of the pressure relief component 22 disposed on the first wall 211, and can reduce the risk of liquid leakage caused by improper assembly between the pressure relief component 22 and the first wall 211.

In some embodiments, the first groove 221 is formed on the first wall 211 in a stamping manner; and/or the second groove 223 is formed on the first wall 211 in a stamping manner.

It should be noted that if the first groove 221 is of a one-stage groove structure, when the first groove 221 is formed on the first wall 211, the first groove may be stamped on the first wall 211 once to stamp out the first groove 221 on the first wall 211. If the first groove 221 is of a multi-stage groove structure, when the first groove 221 is formed on the first wall 211, the first groove may be stamped on the first wall 211 multiple times to stamp out the one-stage groove each time, and the first groove 221 is finally formed after multiple times of stamping.

In the present embodiment, by forming the first groove 221 on the first wall 211 in a stamping manner, a forming manner of the first groove 221 is simple, which is beneficial to reduce the production cost of the battery cell 20. Similarly, by forming the second groove 223 on the first wall in a stamping manner, a forming manner of the second groove 223 is simple, which is beneficial to reduce the production cost of the battery cell 20.

It should be noted that the structure of the battery cell 20 is not limited thereto. In some embodiments, the battery cell 20 may also be of another structure, for example, the pressure relief component 22 is disposed separately from the first wall 211. That is to say, the pressure relief component 22 and the first wall 211 are two separately disposed components, and the pressure relief component 22 is installed on the first wall 211. That is, the first wall 211 is provided with a pressure relief hole for installing the pressure relief component 22, and the pressure relief component 22 is connected to a hole wall surface of the pressure relief hole and covers the pressure relief hole. Exemplarily, the pressure relief component 22 may be welded to the first wall 211.

In the present embodiment, by setting the pressure relief component 22 and the first wall 211 as a separately disposed structures, the pressure relief component 22 is a structure installed on the first wall 211. The battery cell 20 of such a structure can reduce the difficulty of disposing the pressure relief component 22 on the first wall 211, and make processing procedures of the shell 21 and processing procedures of the pressure relief component 22 be carried out simultaneously, which is conducive to optimizing the production rhythm of the battery cell 20.

According to some embodiments of the present application, referring to FIG. 5 and FIG. 6, the first wall 211 is of a rectangular structure, and a width direction of the first wall 211 is parallel to the first direction Y.

The shell 21 of the battery cell 20 is of a cuboid structure, and the width direction of the first wall 211 is the first direction Y. Correspondingly, the length direction of the first wall 211 is the second direction Z, so that the second wall 2123 and the third wall 2124 of the shell 212 are the two walls of the shell 212 in the width direction of the first wall 211, and thus the thickness direction of the battery cell 20 is the first direction Y.

In the present embodiment, by setting the first wall 211 as the rectangular structure and the width direction of the first wall to be the first direction Y, the second groove 223 is located on one side of the first groove 221 in the width direction of the first wall 211, so that the second groove 223 is formed on the side where extrusion or impact is extremely likely to occur during the forming process of the first groove 221, and thus the second groove 223 can further buffer an extrusion phenomenon of the forming of the first groove 221, and can further play a protective role in buffering the influence of stress on the first groove 221.

According to some embodiments of the present application, referring to FIG. 8, in the thickness direction X of the first wall, a minimum residual thickness of the second groove 223 is greater than a minimum residual thickness of the first groove 221. That is to say, in the thickness direction X of the first wall, a minimum thickness of the groove bottom wall of the second groove 223 is greater than a minimum thickness of the groove bottom wall of the first groove 221. That is, in the thickness direction X of the first wall, a groove depth of the first groove 221 is greater than a groove depth of the second groove 223.

It should be noted that, in the embodiment where the first groove 221 includes only one smooth groove segment, the minimum residual thickness of the first groove 221 is the minimum thickness of the residual portion of the pressure relief component 22 at the groove segment; and in the embodiment where the first groove 221 includes the plurality of smooth groove segments, the minimum residual thickness of the first groove 221 is a minimum value of the thicknesses of the residual portion of the pressure relief component 22 at the plurality of groove segments.

In the present embodiment, by setting the minimum residual thickness of the second groove 223 to be greater than the minimum residual thickness of the first groove 221, the strength of the region where the pressure relief component 22 is provided with the first groove 221 is smaller than the strength of the region where the pressure relief component 22 is provided with the second groove 223, so that the pressure relief component 22 can preferentially rupture along the first groove 221 and release the internal pressure of the battery cell 20, which is beneficial to alleviate a phenomenon of a poor pressure relief effect of the battery cell 20 due to the fact that the pressure relief component 22 ruptures from the region provided with the second groove 223.

According to some embodiments of the present application, referring to FIG. 3, FIG. 4 and FIG. 5, the shell 21 may include a shell body 212 and an end cover 213, an accommodating cavity 2121 having an opening 2122 is formed in the interior of the shell 212, the accommodating cavity 2121 is used to accommodate an electrode assembly 23, the end cover 213 closes the opening 2122, and the shell 212 includes the first wall 211.

The shell body 212 includes a side wall and a bottom wall which are integrally formed, that is, the shell body 212 is manufactured by an integral forming process, for example, the integral forming process such as stamping, casting or extrusion molding. In other words, the side wall and the bottom wall of the shell are of an integral structure.

The shell body 212 includes the first wall 211, that is, the first wall 211 is a wall of the shell 212. Exemplarily, the first wall 211 is the bottom wall of the shell 212 disposed opposite to the end cover 213 in the thickness direction X of the first wall. That is, the pressure relief component 22 is disposed on the bottom wall of the shell 212. Correspondingly, the side wall includes a second wall 2123 and a third wall 2124 which are disposed opposite to each other in the first direction Y, as well as a fourth wall 2125 and a fifth wall 2126 which are disposed opposite to each other in the second direction Z. The second wall 2123, the fourth wall 2125, the third wall 2124 and the fifth wall 2126 are connected end to end in sequence to enclose and form the side wall of the shell body 212.

In the present embodiment, by setting the first wall 211 of the shell 21 as one wall of the shell body 212, the battery cell 20 of such a structure can make the region of the shell 21 provided with the pressure relief component 22 far away from the end cover 213, thereby effectively alleviating a phenomenon that the stress caused by the interconnection between the end cover 213 and the shell body 212 acts on the pressure relief component 22, so as to reduce the impact on the first groove 221 and the second groove 223 of the pressure relief component 22, which is beneficial to reduce the risk of rupturing or structural strength reduction of the pressure relief component 22 under pulling of the stress, thereby prolonging the service life of the battery cell and improving the use reliability of the battery cell 20.

It should be noted that the structure of the battery cell 20 is not limited to this. In some embodiments, the battery cell 20 may further have other structures. For example, the shell 21 may include a shell body 212 and an end cover 213, an accommodating cavity 2121 having an opening 2122 is formed in the interior of the shell 212, the accommodating cavity 2121 is used to accommodate an electrode assembly 23, the end cover 213 closes the opening 2122, and the end cover 213 is the first wall 211. That is, the pressure relief component 22 is disposed on the end cover 213 of the shell 21. Correspondingly, the second wall 2123 and the third wall 2124 are two walls that are disposed opposite to each other in the first direction Y in the side wall of the shell body 212.

In the present embodiment, by setting the first wall 211 of the shell 21 as the end cover 213 of the shell 21 for closing the opening 2122, the battery cell 20 of such a structure facilitates disposing the pressure relief component 22 on the end cover 213, which is beneficial to reduce the manufacturing difficulty of the battery cell 20, so as to improve the production efficiency of the battery cell 20.

It should be noted that the structure of the battery cell 20 may also be various. In some embodiments, the shell 21 may include the shell body 212 and the two end covers 213. The accommodating cavity 2121 is formed in the shell body 212, and the accommodating cavity 2121 is used to accommodate the electrode assembly 23. Openings 2122 are formed in two opposite ends of the shell body 212, and the two openings 2122 are both connected to the accommodating cavity 2121. The two end covers 213 respectively close the two openings 2122, and one of the two end covers 213 is the first wall 211.

In the present embodiment, the shell body 212 of the shell 21 is provided with the openings 2122 on two opposite ends, and the two end covers 213 respectively close the two openings 2122. The first wall 211 is one of the two end covers 213. The battery cell 20 of such a structure is convenient to assemble the battery cell 20 from the two ends of the shell body 212, which is conducive to reducing the manufacturing difficulty and assembly difficulty of the battery cell 20. It is also convenient to dispose the pressure relief component 22 on the end covers 213, which is conducive to reducing the manufacturing difficulty of the battery cell 20, so as to improve the production efficiency of the battery cell 20.

Of course, the structure of the battery cell 20 is not limited thereto. In the embodiment where the shell 21 includes the shell body 212 and the two end covers 213, the shell body 212 may include a first wall 211, that is, the first wall 211 is a wall in the shell body 212. The battery cell 20 of such a structure can make the region of the shell 21 provided with the pressure relief component 22 far away from the end cover 213, thereby effectively alleviating a phenomenon that the stress caused by the interconnection between the end cover 213 and the shell body 212 acts on the pressure relief component 22, so as to reduce the impact on the first groove 221 and the second groove 223 of the pressure relief component 22, which is beneficial to reduce the risk of rupturing or structural strength reduction of the pressure relief component 22 under pulling of the stress, thereby prolonging the service life of the battery cell and improving the use reliability of the battery cell 20.

According to some embodiments of the present application, the present application further provides a battery 100, and the battery 100 includes the battery cell 20 according to any one of the above solutions.

Referring to FIG. 2, the battery 100 may further include a box 10, and the battery cell 20 is accommodated in the box 10.

In some embodiments, the box 10 may include a first box body 11 and a second box body 12. The first box body 11 and the second box body 12 cover each other, and the first box body 11 and the second box body 12 together define an assembling space for accommodating the battery cell 20.

Optionally, the second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box 10 formed by the first box body 11 and the second box body 12 may be in various shapes, such as a cylinder or a cuboid. Exemplarily, in FIG. 2, the box 10 is of a cuboid structure.

Optionally, one battery cell 20 or a plurality of battery cells 20 may be arranged in the box 10. Exemplarily, in FIG. 2, a plurality of battery cells 20 are arranged in the box 10 of the battery 100, and the plurality of battery cells 20 may be connected in series, parallel or parallel-series connection, where the parallel-series connection means that some of the plurality of battery cells 20 are connected in series and some are connected in parallel. The plurality of battery cells 20 may be directly connected in series, parallel or parallel-series connection together, and then, the whole formed by the plurality of battery cells 20 is accommodated in the box 10. Of course, the battery 100 may also be in the form of a battery module composed of a plurality of battery cells 20 in series, parallel or parallel-series connection first, and then, a plurality of battery modules are connected in series, parallel or parallel-series connection to form a whole which is accommodated in the box 10.

The battery 100 may further include other structures. For example, the battery 100 may further include a convergence component, and the plurality of battery cells 20 may be connected through the convergence component so as to achieve electrical connection between the plurality of battery cells 20.

It should be noted that in some embodiments, the battery 100 may not be provided with a box 10. The battery 100 includes a plurality of battery cells 20, and the battery 100 composed of the plurality of battery cells 20 may be directly assembled on an electrical apparatus to provide electric energy to the electrical apparatus through the plurality of battery cells 20. In other words, the box 10 may be used as a part of the electrical apparatus. The electrical apparatus is, for example, a vehicle 1000, and the box 10 may be used as a part of a chassis structure of the vehicle 1000. For example, a part of the box 10 may become at least a part of a floor of the vehicle 1000, or a part of the box 10 may become at least a part of a cross beam and a longitudinal beam of the vehicle 1000.

According to some embodiments of the present application, the present application further provides an electrical apparatus, the electrical apparatus includes a battery cell 20 according to any one of the above solutions, and the battery cell 20 is configured to provide electric energy to the electrical apparatus.

The electrical apparatus may be any one of the above devices or systems applying the battery cell 20.

According to some embodiments of the present application, referring to FIG. 3 to FIG. 9, the present application provides a battery cell 20, and the battery cell 20 includes a shell 21 and an electrode assembly 23. The shell 21 is of a cuboid structure, and the shell 21 has a first wall 211. The shell 21 includes a shell body 212 and an end cover 213. A accommodating cavity 2121 having an opening 2122 is formed in the shell body 212. The electrode assembly 23 is accommodated in the accommodating cavity 2121. The end cover 213 closes the opening 2122. A bottom wall of the shell body 212 disposed opposite to the end cover 213 in a thickness direction X of the first wall is the first wall 211. The first wall 211 is of a rectangular structure. A width direction of the first wall 211 is a first direction Y, and a length direction of the first wall 211 is a second direction Z. The first wall 211 is provided with a first groove 221 and two second grooves 223. In the thickness direction X of the first wall, the first groove 221 is disposed on one side of the pressure relief component 22 facing away from an interior of the shell 21, the second grooves 223 are disposed on one side of the pressure relief component 22 facing the interior of the shell 21, and a minimum residual thickness of the second grooves 223 is greater than a minimum residual thickness of the first groove 221. The first wall 211 is configured to be capable of rupturing along at least part of the first groove 221 during pressure relief of the battery cell 20, so as to release the internal pressure of the battery cell 20. The first groove 221 is multi-stage grooves arranged sequentially in the thickness direction X of the first wall. The first groove 221 includes a first groove segment 2211 and two second groove segments 2212. The two second groove segments 2212 are disposed opposite to each other in the second direction Z. The second groove segments 2212 and the second grooves 223 are arranged in the first direction Y. The first groove segment 2211 extends in the second direction Z. Two ends of the first groove segment 2211 are connected to the two second groove segments 2212 respectively. The first groove segment 2211 and the two second groove segments 2212 jointly define a predetermined pressure relief region 222. Connection positions of the two second groove segments 2212 and the first groove segment 2211 deviate from two ends of the two second groove segments 2212, so that predetermined pressure relief regions 222 are formed on two sides of the first groove segment 2211 in the first direction Y. In the first direction Y, the two second grooves 223 are respectively located on two sides of the first groove 221, and the second grooves 223 and the first grooves 221 are arranged in the first direction Y. The second grooves 223 are configured to guide at least part of the predetermined pressure relief region 222 to flip over, so as to open at least part of the predetermined pressure relief region 222 and release the internal pressure of the battery cell 20. A length of the second groove segments 2212 in the first direction Y is $L_7$, which meets that $6\ mm \le L_7 \le 50\ mm$. In the first direction Y, a minimum distance between a projection of the first groove 221 in the thickness direction X of the first wall and a projection of the second groove 223 in the thickness direction X of the first wall is $L_1$, which meets that $0.1\ mm \le L_1 \le 4\ mm$; optionally, $0.2\ mm \le L_1 \le 2\ mm$. The shell 21 further includes a second wall 2123 and a third wall 2124 which are disposed opposite to each other in the first direction Y. The first wall 211 is connected to the second wall 2123 and the third wall 2124. In the first direction Y, the second wall 2123 has a first outer surface 2123a facing away from the interior of the shell 21, and the third wall 2124 has a second outer surface 2124a facing away from the interior of the shell 21. In the thickness direction X of the first wall, the first wall 211 has a third outer surface 2111 facing away from the interior of the shell 21. The third outer surface 2111 is connected to the first outer surface 2123a through a first arc surface 214, and the third outer surface 2111 is connected to the second outer surface 2124a through a second arc surface 215. In the first direction Y, the second grooves 223 are disposed between the first groove 221 and the first outer surface 2123a as well as the second outer surface 2124a. One of the two second grooves 223 is located between the first arc surface 214 and the first groove 221, and the other second groove 223 is located between the second arc surface 215 and the first groove 221. In the first direction Y, a distance between the first outer surface 2123a and the second outer surface 2124a is D, a minimum distance between the first groove 221 and the first outer surface 2123a is $L_2$, and a minimum distance between the first groove 221 and the second outer surface 2124a is $L_3$, which meets that $0 \le |L_2-L_3|/D \le 0.1$, $2\ mm \le L_2 \le 12\ mm$, $2\ mm \le L_3 \le 12\ mm$, and $15\ mm \le D \le 90\ mm$. Minimum distances from the second groove 223 to the first outer surface 2123a and the second outer surface 2124a are $L_4$ and $L_5$ respectively, which meets that $|L_5-L_4|/D \ge 0.4$. A first weak portion 224 is formed at a bottom of the first groove 221. The pressure relief component 22 is configured to be capable of rupturing along at least part of the first weak portion 224 during pressure relief of the battery cell 20. The first weak portion 224 includes at least one weak segment 2241. A cross-sectional area of the weak segment 2241 perpendicular to its extension direction is $S_1$. A second weak portion 225 is formed at a bottom of the second groove 223. A cross-sectional area of the second weak portion 225 perpendicular to its extension direction is $S_2$, which meets that $0.7<S_2/S_1\leq1.5$. The second groove 223 extends in the second direction Z, and two ends of the second groove 223 in the second direction Z extend beyond two sides of the first groove 221 in the second direction Z respectively. A length of the second groove 223 is $L_6$, which meets that $8\,mm \leq L_6 \leq 60$ mm.

It should be noted that the embodiments in the present application and features in the embodiments may be mutually combined in the case of no conflict.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

**Claims**

1.   A battery cell, comprising:

a shell, comprising a first wall; and
a pressure relief component, disposed on the first wall, wherein the pressure relief component is provided with a first groove, the first groove defines at least one predetermined pressure relief region, and the pressure relief component is configured to be capable of rupturing along at least part of the first groove during pressure relief of the battery cell,
wherein the pressure relief component is further provided with a second groove, the second groove and the first groove are arranged in a first direction, the second groove is located on one side of the first groove in the first direction, the first direction is perpendicular to a thickness direction of the first wall, and the second groove is configured to guide at least part of the predetermined pressure relief region to flip over to open at least part of the predetermined pressure relief region.

2.   The battery cell according to claim 1, wherein the first groove and the second groove are spaced apart in the first direction.

3.   The battery cell according to claim 2, wherein in the first direction, a minimum distance between a projection of the first groove in the thickness direction of the first wall and a projection of the second groove in the thickness direction of the first wall is $L_1$, which meets that $0.1\,mm \leq L_1 \leq 4\,mm$; optionally, $0.2\,mm \leq L_1 \leq 2\,mm$.

4.   The battery cell according to any one of claims 1 to 3, wherein the shell further comprises a second wall and a third wall which are disposed opposite to each other in the first direction, the first wall is connected with the second wall and the third wall; in the first direction, the second wall has a first outer surface facing away from an interior of the shell, and the third wall has a second outer surface facing away from an interior of the shell;

wherein in the first direction, the second groove is formed between the first groove and the first outer surface; and/or
in the first direction, the second groove is formed between the first groove and the second outer surface.

5.   The battery cell according to claim 4, wherein in the thickness direction of the first wall, the first wall has a third outer surface facing away from the interior of the shell, and the third outer surface is connected to the first outer surface through a first arc surface;
wherein in the first direction, the second groove is located between the first arc surface and the first groove.

6.   The battery cell according to claim 4 or 5, wherein in the thickness direction of the first wall, the first wall has the third outer surface facing away from the interior of the shell, and the third outer surface is connected to the second outer surface through a second arc surface;
wherein in the first direction, the second groove is located between the second arc surface and the first groove.

7.   The battery cell according to any one of claims 4 to 6, wherein in the first direction, a difference between a minimum

distance, $L_2$, from the first groove to the first outer surface and a minimum distance, $L_3$, from the first groove to the second outer surface is greater than or equal to 0, and the difference between the minimum distance, $L_2$, from the first groove to the first outer surface and the minimum distance, $L_3$, from the first groove to the second outer surface is less than or equal to 0.1 times a distance, D, between the first outer surface and the second outer surface.

8. The battery cell according to claim 6, wherein 2 mm $\leq L_2 \leq$ 12 mm; and/or

$$2 \text{ mm} \leq L_3 \leq 12 \text{ mm}.$$

9. The battery cell according to any one of claims 4 to 8, wherein in the first direction, a difference between a minimum distance, $L_4$, from the second groove to the first outer surface and a minimum distance, $L_5$, from the second groove to the second outer surface is greater than or equal to 0.4 times the distance, D, between the first outer surface and the second outer surface;
   wherein a first weak portion is formed at a bottom of the first groove, the pressure relief component is configured to be capable of rupturing along at least part of the first weak portion during pressure relief of the battery cell, the first weak portion comprises at least one weak segment, a second weak portion is formed at a bottom of the second groove, a cross-sectional area, $S_2$, of the second weak portion perpendicular to its extension direction is greater than 0.7 times a cross-sectional area, $S_1$, of the weak segment perpendicular to its extension direction, and the cross-sectional area, $S_2$, of the second weak portion perpendicular to its extension direction is less than or equal to 1.5 times the cross-sectional area, $S_1$, of the weak segment perpendicular to its extension direction.

10. The battery cell according to claim 9, wherein 15 mm $\leq D \leq$ 90 mm.

11. The battery cell according to any one of claims 1 to 10, wherein in the thickness direction of the first wall, two ends of the projection of the second groove in its extension direction extend respectively beyond two end portions of the first groove.

12. The battery cell according to claim 11, wherein a length of the second groove is $L_6$, which meets that 8 mm $\leq L_6 \leq$ 60 mm.

13. The battery cell according to any one of claims 1 to 12, wherein in the thickness direction of the first wall, the first groove and the second groove are respectively formed in two sides of the pressure relief component.

14. The battery cell according to any one of claims 1 to 13, wherein in the thickness direction of the first wall, the first groove is disposed on one side of the pressure relief component facing away from the interior of the shell.

15. The battery cell according to any one of claims 1 to 14, wherein in the thickness direction of the first wall, the second groove is disposed on one side of the pressure relief component facing the interior of the shell.

16. The battery cell according to any one of claims 1 to 15, wherein the first groove comprises a first groove segment and two second groove segments, the two second groove segments are disposed opposite to each other in a second direction, and the second groove segments and the second groove are arranged in the first direction; and the first groove segment is connected to the two second groove segments, the first groove segment and the two second groove segments jointly define the predetermined pressure relief region, and the second direction is perpendicular to the thickness direction of the first wall and the first direction.

17. The battery cell according to claim 16, wherein connection positions of the two second groove segments and the first groove segment deviate from two ends of the two second groove segments, so as to form the predetermined pressure relief regions on two sides of the first groove segment in the first direction;
   wherein the pressure relief component is provided with the two second grooves, and in the first direction, the two second grooves are located on two sides of the first groove respectively.

18. The battery cell according to claim 17, wherein the first groove segment and the two second groove segments extend along a linear trajectory, and the first groove segment is perpendicular to the two second groove segments.

19. The battery cell according to any one of claims 16 to 18, wherein the second groove segments extend in the first direction, and a length of each second groove segment in the first direction is $L_7$, which meets that 6 mm $\leq L_7 \leq$ 50 mm.

20. The battery cell according to any one of claims 1 to 15, wherein the first groove comprises a first groove segment and a second groove segment, the first groove segment is connected to the second groove segment, and the first groove segment and the second groove segment jointly define the predetermined pressure relief region.

21. The battery cell according to any one of claims 1 to 15, wherein the first groove is a groove extending along an arc-shaped trajectory, and the predetermined pressure relief region is located on an inner side of the first groove.

22. The battery cell according to any one of claims 1 to 21, wherein the first groove comprises multi-stage grooves arranged sequentially in the thickness direction of the first wall.

23. The battery cell according to any one of claims 1 to 22, wherein the pressure relief component and the first wall are integrally formed.

24. The battery cell according to claim 23, wherein the first groove is formed on the first wall in a stamping manner; and/or the second groove is formed on the first wall in a stamping manner.

25. The battery cell according to any one of claims 1 to 22, wherein the pressure relief component is separately disposed from the first wall.

26. The battery cell according to any one of claims 1 to 25, wherein the first wall is of a rectangular structure, and a width direction of the first wall is parallel to the first direction.

27. The battery cell according to any one of claims 1 to 26, wherein in the thickness direction of the first wall, a minimum residual thickness of the second groove is greater than a minimum residual thickness of the first groove.

28. The battery cell according to any one of claims 1 to 27, wherein the shell comprises:

    a shell body, internally formed with an accommodating cavity having an opening, wherein the accommodating cavity is configured to accommodate an electrode assembly; and
    an end cover, closing the opening,
    wherein the shell body comprises the first wall; or
    the end cover is the first wall.

29. The battery cell according to any one of claims 1 to 27, wherein the shell comprises:

    a shell body, internally formed with an accommodating cavity, wherein the accommodating cavity is configured to accommodate an electrode assembly, openings are formed in two opposite ends of the shell body respectively, and the two openings communicate with the accommodating cavity; and
    two end covers, closing the two openings respectively,
    wherein one of the two end covers is the first wall; or
    the shell body comprises the first wall.

30. The battery cell according to any one of claims 1 to 29, wherein a material of the first wall comprises a steel material or an aluminum alloy.

31. A battery, comprising the battery cell according to any one of claims 1 to 30.

32. An electrical apparatus, comprising the battery cell according to any one of claims 1 to 30, wherein the battery cell is configured to provide electric energy.

1000

**FIG. 1**

100

**FIG. 2**

EP 4 685 969 A1

**FIG. 3**

**FIG. 4**

**FIG. 5**

**FIG. 6**

EP 4 685 969 A1

**FIG. 7**

**FIG. 8**

43

**FIG. 9**

**FIG. 10**

**FIG. 11**

## INTERNATIONAL SEARCH REPORT

| International application No. |
| --- |
| **PCT/CN2023/143624** |

| A. | CLASSIFICATION OF SUBJECT MATTER |
| --- | --- |

H01M50/342(2021.01)i; H01M50/103(2021.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNTXT, DWPI, WPABS, ENTXT, CNKI: 电池, 壳, 壁, 表面, 泄压, 槽, 形变, 裂开, battery, shell, surface, pressure, groove, slot, crack, deformation

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 116666887 A (NINGDE CONTEMPORARY AMPEREX TECHNOLOGY CO., LTD.) 29 August 2023 (2023-08-29) description, paragraphs 137-331, and figures 1-22 | 1-32 |
| E | CN 221486733 U (NINGDE CONTEMPORARY AMPEREX TECHNOLOGY CO., LTD.) 06 August 2024 (2024-08-06) description, paragraphs 121-263, and figures 1-10 | 1-2, 4, 13-18, 20-24, 26-28, 30-32 |
| A | CN 116207434 A (NINGDE CONTEMPORARY AMPEREX TECHNOLOGY CO., LTD.) 02 June 2023 (2023-06-02) entire document | 1-32 |
| A | US 2003131880 A1 (SANYO ELECTRIC CO., LTD.) 17 July 2003 (2003-07-17) entire document | 1-32 |

| ☐ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 September 2024** | **25 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/143624**

| Patent document cited in search report | | | Publication date (day/month/year) | Patent family member(s) | | | Publication date (day/month/year) |
|---|---|---|---|---|---|---|---|
| CN | 116666887 | A | 29 August 2023 | CN | 221353047 | U | 16 July 2024 |
| CN | 221486733 | U | 06 August 2024 | None | | | |
| CN | 116207434 | A | 02 June 2023 | None | | | |
| US | 2003131880 | A1 | 17 July 2003 | EP | 1321993 | A2 | 25 June 2003 |
| | | | | EP | 1321993 | A3 | 24 January 2007 |
| | | | | EP | 1321993 | B1 | 11 April 2012 |
| | | | | TW | 200301580 | A | 01 July 2003 |
| | | | | TWI | 289370 | B | 01 November 2007 |
| | | | | KR | 20030053004 | A | 27 June 2003 |
| | | | | KR | 100947931 | B1 | 15 March 2010 |
| | | | | US | 7140380 | B2 | 28 November 2006 |
| | | | | JP | 2003187774 | A | 04 July 2003 |
| | | | | JP | 4155734 | B2 | 24 September 2008 |
| | | | | CN | 1427488 | A | 02 July 2003 |
| | | | | CN | 1285130 | C | 15 November 2006 |

Form PCT/ISA/210 (patent family annex) (July 2022)